# EUROPEAN PATENT APPLICATION

(11) **EP 4 844 544 A1**
(43) Date of publication of application: **25.11.2026**
(21) Application number: 25752481.9
(22) Date of filing: 07.02.2025
(51) Int. Cl.: G06F 3/02, G06F 3/046, G06F 3/01, H01H 36/00, G06F 3/041, H04M 1/23

(54) **ELECTRONIC DEVICE INCLUDING BUTTON ASSEMBLY**

(30) Priority: 08.02.2024 KR 20240019509; 13.03.2024 KR 20240035371
(71) Applicant: Samsung Electronics Co., Ltd., Suwon-si, Gyeonggi-do 16677 (KR)
(72) Inventor: KIM, Taesik, Suwon-si, Gyeonggi-do 16677 (KR); JANG, Hyunsoo, Suwon-si, Gyeonggi-do 16677 (KR); BAEK, Kunwoo, Suwon-si, Gyeonggi-do 16677 (KR); SONG, Yongjae, Suwon-si, Gyeonggi-do 16677 (KR); CHO, Chihyun, Suwon-si, Gyeonggi-do 16677 (KR)
(74) Representative: HGF
(86) International application number: PCT/KR2025/001859
(87) International publication number: WO 2025/170373

(57) **Abstract**

The present disclosure relates to an electronic device. According to an embodiment of the present disclosure, an electronic device may be provided, the electronic device including: a housing; and a button assembly, at least a portion of which is visually exposed to the outside of the housing. The button assembly may include: a body part; a first magnetic member disposed on one surface of the body part; a coil portion facing the first magnetic member; and a driving circuit electrically connected to the coil portion and controlling a flow of a current flowing through the coil portion to generate an attractive force and/or a repulsive force between the first magnetic member and the coil portion.

## Description

### [Technical Field]

Embodiments of the disclosure relate to an electronic device, for example, an electronic device including a button assembly.

### [Background Art]

With the remarkable advancements in information and communication technology and semiconductor technology, the dissemination and utilization of various electronic devices have been rapidly increasing. In particular, recent electronic devices are being developed to be portable and capable of performing communication.

An electronic device may refer to a device that performs a specific function according to an installed program, such as home appliances, electronic organizers, portable multimedia players, mobile communication terminals, tablet PCs, video/audio devices, desktop/laptop computers, and vehicle navigation systems. For example, such electronic devices may output stored information as audio or video. As the integration of electronic devices increases and ultra-high-speed, high-capacity wireless communication becomes commonplace, various functions may recently be implemented in a single electronic device, such as a mobile communication terminal. For instance, not only communication functions but also entertainment functions such as games, multimedia functions such as music/video playback, communication and security functions such as mobile banking, and schedule management or electronic wallet functions are being integrated into a single electronic device. Such electronic devices are being miniaturized so that users can conveniently carry them.

As the size of electronic devices becomes smaller, there is a growing need for optimal internal space.

An electronic device may include components that can be mounted therein, for example, a button for receiving a signal input from the outside. When a physical pressure is applied, the button may be moved into the electronic device to transmit a signal from the outside to an internal processor of the device. According to an embodiment, the button may be based on a dome switch that occupies a relatively large mounting space.

The above information may be provided as background art for the purpose of aiding the understanding of the disclosure. No admission or determination is made as to whether any of the above information may be applied as prior art in connection with the disclosure.

### [Detailed Description of the Invention]

### [Technical Solution]

According to an embodiment of the disclosure, an electronic device may be provided, comprising a housing and a button assembly, at least a portion of which is visually exposed to the outside of the housing. The button assembly may comprise a body portion; a first magnetic member disposed on one surface of the body portion; a coil portion facing the first magnetic member; and a driving circuit electrically connected to the coil portion and configured to control a flow of current flowing through the coil portion to generate an attractive force and/or a repulsive force between the first magnetic member and the coil portion.

According to an embodiment of the disclosure, an electronic device may be provided, comprising a housing; and a button assembly, at least a portion of which is visually exposed to the outside of the housing. The button assembly may comprise a sensor for sensing an input when a user touches the button assembly; a body portion movably disposed in the housing; a first protrusion protruding from the body portion toward an internal space of the housing; a first magnetic member disposed on one surface of the first protrusion; a coil portion disposed to face the first magnetic member; a first yoke disposed at one end of the coil portion; and a driving circuit electrically connected to the coil portion and configured to control a flow of current flowing through the coil portion to generate an attractive force or a repulsive force between the first magnetic member and the coil portion. The driving circuit may be configured to move the body portion in one direction or another direction to provide a corresponding haptic feedback when a user's touch input is received through the sensor.

According to an embodiment of the disclosure, an electronic device may be provided, comprising a housing; and a button assembly, at least a portion of which is visually exposed to the outside of the housing. The button assembly may comprise a sensor for sensing an input when a user touches the button assembly; a body portion movably disposed in the housing; a first protrusion protruding from the body portion toward an internal space of the housing; a first magnetic member disposed on one surface of the first protrusion or inside the housing; a coil portion disposed to face the first magnetic member; a first yoke disposed at one end of the coil portion; and a driving circuit electrically connected to the coil portion and configured to control a flow of current flowing through the coil portion to generate an attractive force between the first magnetic member and the coil portion. The driving circuit may be configured to move the body portion in one direction or another direction to provide a corresponding haptic feedback when a user's touch input is received through the sensor.

### [Brief Description of Drawings]

The above and other aspects, configurations, and/or advantages of the disclosure will become more apparent from the following detailed description taken in conjunction with the accompanying drawings.
FIG. 1 is a block diagram of an electronic device in a network environment according to various embodiments.
FIG. 2 is a front perspective view of an electronic device according to an embodiment of the disclosure.
FIG. 3 is a rear perspective view of an electronic device according to an embodiment of the disclosure.
FIG. 4 is a view illustrating a button assembly according to an embodiment of the disclosure.
FIG. 5 is a view illustrating a feedback curve in a case where a click sensation is provided according to a deformation of a switch upon an input to a button assembly, according to an embodiment of the disclosure.
FIG. 6 is a view illustrating an interior of an electronic device, according to an embodiment of the disclosure.
FIG. 7 is a view illustrating an intensity of vibration provided to an electronic device when a vibration motor vibrates, according to an embodiment of the disclosure.
FIG. 8 is a view illustrating an intensity of vibration provided to an electronic device when a vibration motor vibrates, according to an embodiment of the disclosure.
FIG. 9 is a graph illustrating various patterns of haptic feedback that can be provided through a button assembly, according to an embodiment of the disclosure.
FIG. 10 is a view illustrating a button assembly according to an embodiment of the disclosure.
FIG. 11 is a view illustrating the movement of a body portion in a first direction upon application of a current to a coil portion, according to an embodiment of the disclosure.
FIG. 12 is a view illustrating the movement of a body portion in a second direction upon application of a current to a coil portion, according to an embodiment of the disclosure.
FIG. 13 is a view illustrating a button assembly according to an embodiment of the disclosure.
FIG. 14 is a view illustrating the movement of a body portion in a first direction upon application of a current to a coil portion, according to an embodiment of the disclosure.
FIG. 15 is a view illustrating the movement of a body portion in a second direction upon application of a current to a coil portion, according to an embodiment of the disclosure.
FIG. 16 is a view illustrating a button assembly according to an embodiment of the disclosure.
FIG. 17 is a view illustrating the movement of a body portion in a first direction upon application of a current to a coil portion, according to an embodiment of the disclosure.
FIG. 18 is a view illustrating the movement of a body portion in a second direction upon application of a current to a coil portion, according to an embodiment of the disclosure.
FIG. 19 is a view illustrating a button assembly according to an embodiment of the disclosure.
FIG. 20 is a view illustrating the movement of a body portion in a first direction upon application of a current to a coil portion, according to an embodiment of the disclosure.
FIG. 21 is a view illustrating the movement of a body portion in a second direction upon application of a current to a coil portion, according to an embodiment of the disclosure.
FIG. 22 is a block diagram illustrating an electrical connection relationship between a driving circuit and a coil portion, according to an embodiment of the disclosure.
FIG. 23 is a view illustrating a button assembly according to an embodiment of the disclosure.
FIG. 24 is a view illustrating a button assembly according to an embodiment of the disclosure.

Throughout the accompanying drawings, similar reference numerals may be assigned to similar parts, components, and/or structures.

### [Mode for Carrying out the Invention]

The following description of the accompanying drawings may provide an understanding of various exemplary implementations of the disclosure, including claims and their equivalents. Although the exemplary embodiments disclosed in the following description include various specific details for assistance in understanding, they are to be considered as one of many various exemplary embodiments. Accordingly, those of ordinary skill in the art will understand that various changes and modifications to the various implementations described in the disclosure may be made without departing from the scope and spirit of the disclosure. In addition, descriptions of well-known functions and configurations may be omitted for clarity and conciseness.

The terms and words used in the following description and claims are not limited to their bibliographical meanings, but may be used to clearly and consistently describe an embodiment of the disclosure. Therefore, it should be apparent to those skilled in the art that the following description of various implementations of the disclosure is provided for illustrative purposes only, and not for the purpose of limiting the disclosure as defined by the scope of rights and its equivalents.

It is to be understood that the singular forms "a", "an", and "the" include plural referents unless the context clearly dictates otherwise. Thus, for example, the term "component surface" may be understood to include one or more of the surfaces of the component.

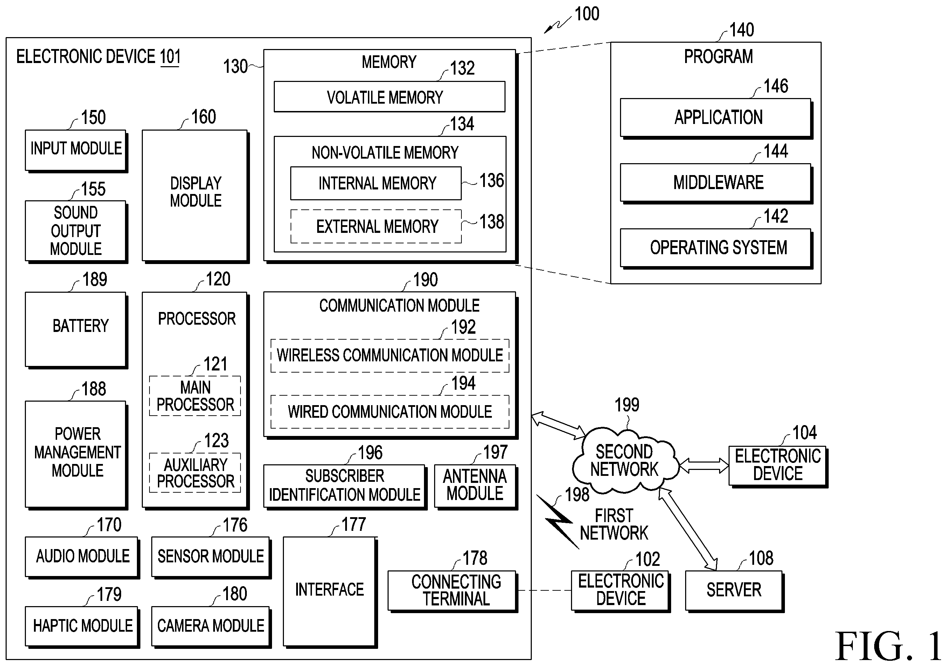

FIG. 1 is a block diagram of an electronic device in a network environment according to various embodiments.

Referring to FIG. 1, in the network environment 100, the electronic device 101 may communicate with an electronic device 102 through a first network 198 (e.g., a short-range wireless communication network), or may communicate with at least one of an electronic device 104 or a server 108 through a second network 199 (e.g., a long-range wireless communication network). According to an embodiment, the electronic device 101 may communicate with the electronic device 104 through the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In some embodiments, in the electronic device 101, at least one of these components (e.g., the connecting terminal 178) may be omitted, or one or more other components may be added. In some embodiments, some of these components (e.g., the sensor module 176, the camera module 180, or the antenna module 197) may be integrated into a single component (e.g., the display module 160). The processor 120 may, for example, execute software (e.g., the program 140) to control at least one other component (e.g., a hardware or software component) of the electronic device 101 connected to the processor 120, and may perform various data processing or computations. According to an embodiment, as at least part of the data processing or computation, the processor 120 may store instructions or data received from another component (e.g., the sensor module 176 or the communication module 190) in volatile memory 132, process the instructions or data stored in the volatile memory 132, and store result data in non-volatile memory 134. According to an embodiment, the processor 120 may include a main processor 121 (e.g., a central processing unit or an application processor) or an auxiliary processor 123 (e.g., a graphics processing unit, a neural processing unit (NPU), an image signal processor, a sensor hub processor, or a communication processor) that is operable independently of, or together with, the main processor 121. For example, when the electronic device 101 includes the main processor 121 and the auxiliary processor 123, the auxiliary processor 123 may be configured to use less power than the main processor 121 or to be specialized for a specified function. The auxiliary processor 123 may be implemented separately from, or as a part of, the main processor 121.

The auxiliary processor 123 may, for example, control at least some of functions or states related to at least one component (e.g., the display module 160, the sensor module 176, or the communication module 190) among the components of the electronic device 101 in place of the main processor 121 while the main processor 121 is in an inactive (e.g., sleep) state, or together with the main processor 121 while the main processor 121 is in an active (e.g., application execution) state. According to an embodiment, the auxiliary processor 123 (e.g., the image signal processor or the communication processor) may be implemented as a part of another functionally related component (e.g., the camera module 180 or the communication module 190). According to an embodiment, the auxiliary processor 123 (e.g., the neural processing unit) may include a hardware structure specialized for processing an artificial intelligence model. The artificial intelligence model may be generated through machine learning. Such learning may, for example, be performed by the electronic device 101 itself in which the artificial intelligence model is performed, or may be performed through a separate server (e.g., the server 108). The learning algorithm may include, for example, supervised learning, unsupervised learning, semi-supervised learning, or reinforcement learning, but is not limited to the aforementioned examples. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-networks, or a combination of two or more of the foregoing, but is not limited to the aforementioned examples. The artificial intelligence model may, additionally or alternatively, include a software structure in addition to the hardware structure.

The memory 130 may store various data used by at least one component (e.g., the processor 120 or the sensor module 176) of the electronic device 101. The data may include, for example, software (e.g., the program 140), and input data or output data for instructions related thereto. The memory 130 may include the volatile memory 132 or the non-volatile memory 134.

The program 140 may be stored as software in the memory 130, and may include, for example, an operating system 142, middleware 144, or an application 146.

The input module 150 may receive instructions or data to be used by a component (e.g., the processor 120) of the electronic device 101 from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as multimedia playback or recording playback. The receiver may be used to receive an incoming call. According to an embodiment, the receiver may be implemented separately from, or as a part of, the speaker.

The display module 160 may visually provide information to the outside (e.g., a user) of the electronic device 101. The display module 160 may include, for example, a display, a hologram device, or a projector, and a control circuit for controlling the corresponding device. According to an embodiment, the display module 160 may include a touch sensor configured to sense a touch, or a pressure sensor configured to measure the intensity of a force generated by the touch.

The audio module 170 may convert sound into an electrical signal, or vice versa, i.e., may convert an electrical signal into sound. According to an embodiment, the audio module 170 may acquire sound through the input module 150, or may output sound through the sound output module 155 or an external electronic device (e.g., the electronic device 102) (e.g., a speaker or headphones) connected directly or wirelessly to the electronic device 101.

The sensor module 176 may sense an operating state (e.g., power or temperature) of the electronic device 101 or an external environmental state (e.g., a user state), and may generate an electrical signal or data value corresponding to the sensed state. According to an embodiment, the sensor module 176 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols that may be used for the electronic device 101 to be connected directly or wirelessly to an external electronic device (e.g., the electronic device 102). According to an embodiment, the interface 177 may include, for example, a high definition multimedia interface (HDMI), a universal serial bus (USB) interface, an SD card interface, or an audio interface.

The connecting terminal 178 may include a connector through which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., vibration or movement) or an electrical stimulus that a user may perceive through a tactile or kinesthetic sense. According to an embodiment, the haptic module 179 may include, for example, a motor, a piezoelectric element, or an electrical stimulation device.

The camera module 180 may capture still images and videos. According to an embodiment, the camera module 180 may include one or more lenses, image sensors, image signal processors, or flashes.

The power management module 188 may manage power supplied to the electronic device 101. According to an embodiment, the power management module 188 may be implemented, for example, as at least a part of a power management integrated circuit (PMIC).

The battery 189 may supply power to at least one component of the electronic device 101. According to an embodiment, the battery 189 may include, for example, a non-rechargeable primary battery, a rechargeable secondary battery, or a fuel cell.

The communication module 190 may support establishment of a direct (e.g., wired) communication channel or a wireless communication channel between the electronic device 101 and an external electronic device (e.g., the electronic device 102, the electronic device 104, or the server 108), and performance of communication through the established communication channel. The communication module 190 may include one or more communication processors that operate independently of the processor 120 (e.g., an application processor) and support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication module). A corresponding communication module among these communication modules may communicate with an external electronic device 104 through a first network 198 (e.g., a short-range communication network such as Bluetooth, wireless fidelity (Wi-Fi) direct, or infrared data association (IrDA)) or a second network 199 (e.g., a long-range communication network such as a legacy cellular network, a 5G network, a next-generation communication network, the Internet, or a computer network (e.g., LAN or WAN)). These various types of communication modules may be integrated into one component (e.g., a single chip), or may be implemented as a plurality of components (e.g., multiple chips) separate from each other. The wireless communication module 192 may identify or authenticate the electronic device 101 within a communication network, such as the first network 198 or the second network 199, by using subscriber information (e.g., an international mobile subscriber identifier (IMSI)) stored in the subscriber identification module 196.

The wireless communication module 192 may support a 5G network beyond a 4G network, and a next-generation communication technology, for example, a new radio access technology (NR). The NR access technology may support high-speed transmission of high-capacity data (enhanced mobile broadband (eMBB)), terminal power minimization and access of a plurality of terminals (massive machine-type communications (mMTC)), or high reliability and low latency (ultra-reliable and low-latency communications (URLLC)). The wireless communication module 192 may, for example, support a high-frequency band (e.g., an mmWave band) to achieve a high data transmission rate. The wireless communication module 192 may support various technologies for securing performance in the high-frequency band, for example, beamforming, massive multiple-input and multiple-output (MIMO), full-dimensional MIMO (FD-MIMO), an array antenna, analog beamforming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for realizing eMBB, a loss coverage (e.g., 164 dB or less) for realizing mMTC, or a U-plane latency (e.g., 0.5 ms or less for each of downlink (DL) and uplink (UL), or a round trip of 1 ms or less) for realizing URLLC.

The antenna module 197 may transmit a signal or power to the outside (e.g., an external electronic device) or receive it from the outside. According to an embodiment, the antenna module 197 may include an antenna including a radiator made of a conductor or a conductive pattern formed on a substrate (e.g., a PCB). According to an embodiment, the antenna module 197 may include a plurality of antennas (e.g., an array antenna). In such a case, at least one antenna suitable for a communication scheme used in a communication network, such as the first network 198 or the second network 199, may be selected from the plurality of antennas, for example, by the communication module 190. A signal or power may be transmitted or received between the communication module 190 and an external electronic device through the at least one selected antenna. According to some embodiments, in addition to the radiator, another component (e.g., a radio frequency integrated circuit (RFIC)) may additionally be formed as a part of the antenna module 197.

According to various embodiments, the antenna module 197 may form an mmWave antenna module. According to an embodiment, the mmWave antenna module may include a printed circuit board, an RFIC disposed on or adjacent to a first surface (e.g., a lower surface) of the printed circuit board and capable of supporting a specified high-frequency band (e.g., an mmWave band), and a plurality of antennas (e.g., an array antenna) disposed on or adjacent to a second surface (e.g., an upper surface or a side surface) of the printed circuit board and capable of transmitting or receiving signals of the specified high-frequency band.

At least some of the components may be connected to each other through a peripheral device communication scheme (e.g., a bus, general purpose input and output (GPIO), serial peripheral interface (SPI), or mobile industry processor interface (MIPI)) and may exchange signals (e.g., commands or data) with each other.

According to an embodiment, the commands or data may be transmitted or received between the electronic device 101 and the external electronic device 104 through the server 108 connected to the second network 199. Each of the external electronic devices 102 or 104 may be a device of the same type as, or a different type from, the electronic device 101. According to an embodiment, all or some of the operations executed in the electronic device 101 may be executed in one or more external electronic devices among the external electronic devices 102, 104, or 108. For example, when the electronic device 101 needs to perform a certain function or service automatically, or in response to a request from a user or another device, the electronic device 101 may, instead of, or in addition to, executing the function or service by itself, request one or more external electronic devices to perform at least a part of the function or service. The one or more external electronic devices that have received the request may execute at least a part of the requested function or service, or an additional function or service related to the request, and may transfer a result of the execution to the electronic device 101. The electronic device 101 may provide the result, as it is or after additional processing, as at least a part of a response to the request. For this purpose, for example, cloud computing, distributed computing, mobile edge computing (MEC), or client-server computing technology may be used. The electronic device 101 may, for example, provide ultra-low-latency services using distributed computing or mobile edge computing. In another embodiment, the external electronic device 104 may include an Internet of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology and IoT-related technology.

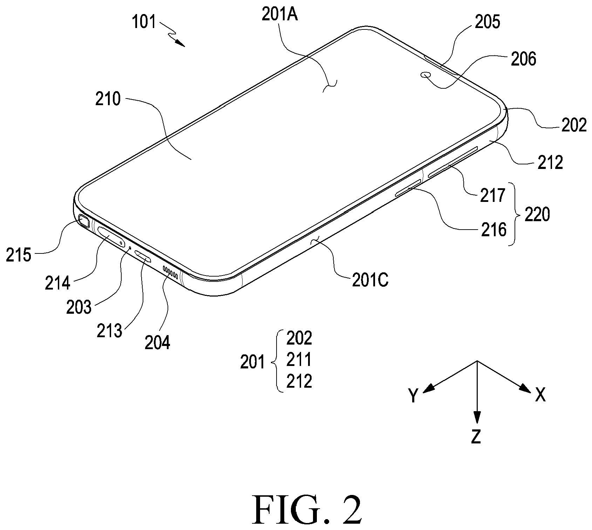

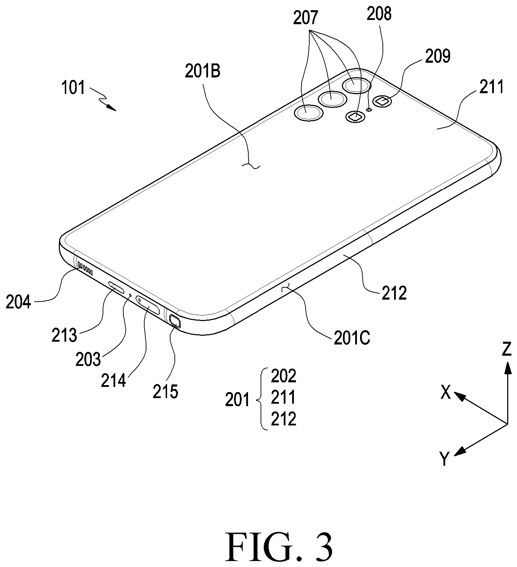

FIG. 2 is a front perspective view of an electronic device according to an embodiment. FIG. 3 is a rear perspective view of an electronic device according to an embodiment.

In the following detailed description, the longitudinal direction of the electronic device 101 may be defined as the 'Y-axis direction', the width direction as the 'X-axis direction', and/or the height direction (thickness direction) as the 'Z-axis direction'. In the following detailed description, references to the longitudinal direction, width direction, and/or height direction (or thickness direction) may refer to the longitudinal direction, width direction, and/or height direction (or thickness direction) of the electronic device. According to an embodiment, in the case of the button assembly, as it may be disposed on a side surface of the electronic device 101, references to the longitudinal direction, width direction, and/or height direction (or thickness direction) based on the button assembly may differ from the longitudinal direction, width direction, and/or height direction (or thickness direction) of the electronic device. For example, the height direction based on the button assembly may be the 'X-axis direction'. According to an embodiment, the height direction based on the button assembly may be the 'Y-axis direction'. In some embodiments, regarding the orientation of a component, the 'negative/positive (-/+)' signs may be mentioned along with the orthogonal coordinate system illustrated in the drawings. For example, referring to FIG. 2, the front surface of the electronic device 101 or the housing 201 may be defined as 'a surface facing the -Z-axis direction', and the rear surface may be defined as 'a surface facing the +Z-axis direction'. According to an embodiment of the disclosure, in an electronic device including a button assembly, the arrangement relationship in the height direction, i.e., the reference for top/bottom, may follow the +X-axis direction/-X-axis direction. That is, a component being disposed on another component may mean that one component is disposed in the +X-axis direction with respect to the other component, and a component being disposed under another component may mean that one component is disposed in the -X-axis direction with respect to the other component. Meanwhile, it should be noted that even if a component is described as being disposed on or under another component, it does not necessarily mean that the entirety of the component is positioned on or under the entirety of the other component. For example, it should be noted that while a portion of a component may be disposed above a portion of another component, another portion of the component may be disposed below another portion of the other component. According to an embodiment, when 'viewing a component from above', this may mean looking at the component in the -X-axis direction from a position spaced apart from the component by a predetermined height. According to an embodiment, a component "facing a certain direction" may be understood to include not only the component facing a direction substantially identical to the "certain direction," but also the component facing a direction substantially parallel to the "certain direction." In the following description, it should be noted that when a component is described as overlapping (or stacked) on another component, the aforementioned description regarding the arrangement relationship in the height direction can be applied. In describing directions, where the 'negative/positive (-/+)' sign is not specified, it may be interpreted as including both the + direction and the - direction, unless defined otherwise. For example, the 'Z-axis direction' may be interpreted as including both the +Z direction and the -Z direction. Likewise, the 'X-axis direction' may be interpreted as including both the +X direction and the -X direction, and the 'Y-axis direction' may be interpreted as including both the +Y direction and the -Y direction. However, in the XYZ spatial coordinate system illustrated in the drawings, if 'negative/positive (-/+)' is not indicated for an axis, the axis may be interpreted as facing the + direction. In describing directions, stating that a component faces any one of the three axes of the orthogonal coordinate system may include facing in a direction parallel to said axis. Hereinafter, in the following description, the 'first direction' may mean the +Y-axis direction, and the 'second direction' may mean the -Y-axis direction. And the 'third direction' may mean the -X-axis, and the 'fourth direction' may mean the +X-axis. It should be noted that the above description is based on the orthogonal coordinate system illustrated in the drawings for the sake of brevity, and such descriptions regarding directions or components do not limit the various embodiments of the disclosure.

Referring to FIG. 2 and FIG.3, an electronic device 101 according to an embodiment may include a housing 201 including a front surface 201A, a rear surface 201B, and a side surface 201C surrounding a space between the front surface 201A and the rear surface 201B. In an embodiment (not shown), the housing 201 may refer to a structure that forms a portion of the front surface 201A of FIG. 2, and the rear surface 201B and the side surfaces 201C of FIG. 3. According to an embodiment, at least a portion of the front surface 201A may be formed by a substantially transparent front plate 202 (e.g., a glass plate including various coating layers, or a polymer plate). The rear surface 201B may be formed by a rear plate 211. The rear plate 211 may be formed by, for example, glass, ceramic, a polymer, a metal (e.g., aluminum, stainless steel (STS), or magnesium), or a combination of at least two of the aforementioned materials. The side surface 201C may be formed by a side bezel structure (or "side member") 212 that is coupled to the front plate 202 and the rear plate 211 and includes metal and/or polymer. In some embodiments, the front plate 202 and the side bezel structure 212 may be formed as one body and include the same material. Alternatively, the rear plate 211 and the side bezel structure 212 may be formed as one body and include the same material (e.g., glass, a metal material such as aluminum, or ceramic). According to an embodiment, the front surface 201A and/or the front plate 202 may be interpreted as a part of the display 210 (e.g., the display module 160 of FIG. 1). According to an embodiment, the housing 201 may include the front plate 202 and the rear plate 211.

According to an embodiment, the electronic device 101 may include at least one or more of a display 210, audio modules 203, 204, 205 (e.g., the audio module 170 of FIG. 1), a sensor module (e.g., the sensor module 176 of FIG. 1), camera modules 206, 207 (e.g., the camera module 180 of FIG. 1), key input devices 216, 217 (e.g., the input module 150 of FIG. 1), and connector holes 213, 214 (e.g., the connection terminal 178 of FIG. 1). In some embodiments, the electronic device 101 may omit at least one of the components (e.g., the connector hole 214) or additionally include other components.

According to an embodiment, the display 210 may be visually exposed through, for example, a substantial portion of the front plate 202. In some embodiments, at least a portion of the display 210 may be exposed through the front plate 202 forming the front surface 201A. According to an embodiment, the display 210 may be a flexible display or a foldable display.

According to an embodiment, the surface (or the front plate 202) of the housing 201 may include a screen display area formed as the display 210 is visually exposed. For example, the screen display area may include the front surface 201A.

In an embodiment (not shown), the electronic device 101 may include a recess or an opening formed in a part of the screen display area (e.g., the front surface 201A) of the display 210, and include at least one or more of an audio module 205, a sensor module (not shown), a light emitting element (not shown), and a camera module 206 aligned with the recess or the opening. In an embodiment (not shown), at least one or more of the audio module 205, the sensor module (not shown), the camera module 206, the fingerprint sensor (not shown), and the light emitting element (not shown) may be included on the rear surface of the screen display area of the display 210.

In an embodiment (not shown), the display 210 may be coupled to or disposed adjacent to a touch sensing circuit, a pressure sensor capable of measuring the intensity (pressure) of a touch, and/or a digitizer that detects a magnetic field-type pen input device 215 (e.g., a stylus pen).

In some embodiments, at least a portion of the key input devices 216, 217 may be disposed on the side bezel structure 212.

According to an embodiment, the audio modules 203, 204, 205 may include, for example, a microphone hole 203 and speaker holes 204, 205. The microphone hole 203 may have a microphone disposed therein for acquiring external sound, and in some embodiments, a plurality of microphones may be disposed to detect the direction of the sound. The speaker holes 204, 205 may include an external speaker hole 204 and a receiver hole 205 for calls. In some embodiments, the speaker holes 204, 205 and the microphone hole 203 may be implemented as a single hole, or the speaker may be included without the speaker holes 204, 205 (e.g., a piezo speaker). The audio modules 203, 204, 205 are not limited to the above-described structure, and various design changes may be made according to the structure of the electronic device 101, such as mounting only some of the audio modules or adding new audio modules.

According to an embodiment, the sensor module (not shown) may, for example, generate an electrical signal or a data value corresponding to the internal operating state of the electronic device 101 or the external environmental state. The sensor module (not shown) may include, for example, a first sensor module (not shown) (e.g., a proximity sensor) and/or a second sensor module (not shown) (e.g., a fingerprint sensor) disposed on the front surface 201A of the housing 201, and/or a third sensor module (not shown) (e.g., a heart rate monitor (HRM) sensor) and/or a fourth sensor module (not shown) (e.g., a fingerprint sensor) disposed on the rear surface 201B of the housing 201. In some embodiments (not shown), the fingerprint sensor may be disposed on the rear surface 201B as well as the front surface 201A (e.g., the display 210) of the housing 201. The electronic device 101 may further include at least one of sensor modules (not shown), for example, a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor (not shown). The sensor module (not shown) is not limited to the above-described structure, and various design changes may be made according to the structure of the electronic device 101, such as mounting only some of the sensor modules or adding new sensor modules.

According to an embodiment, the camera modules 206 and 207 may include, for example, a front camera module 206 disposed on a front surface 201A of the electronic device 101, and a rear camera module 207, a flash 208, and/or an IR sensor 209 disposed on a rear surface 201B. The camera modules 206 and 207 may include one or a plurality of lenses, an image sensor, and/or an image signal processor. The flash 208 may include, for example, a light emitting diode or a xenon lamp. The camera modules 206 and 207 are not limited to the above-described structure, and various design changes may be made according to the structure of the electronic device 101, such as mounting only some of the camera modules or adding new camera modules.

According to an embodiment, the electronic device 101 may include a plurality of camera modules (e.g., dual cameras or triple cameras) having different properties (e.g., field of view) or functions, respectively. For example, the rear camera module 207 may include a plurality of camera modules including lenses having different fields of view. For example, the plurality of camera modules may include at least one of a wide-angle camera, an ultra-wide-angle camera, a telephoto camera, or an infrared (IR) camera (e.g., a time of flight (TOF) camera or a structured light camera). Also, for example, the plurality of camera modules may include an optical zoom camera capable of adjusting magnification. According to an embodiment, for the plurality of camera modules, the electronic device 101 may be configured such that a designated camera module operates or another camera module operates based on a user's selection or under a predetermined environment. According to an embodiment, the IR camera may operate as at least a part of the sensor module. For example, the TOF camera may operate as at least a part of a sensor module (not shown) for sensing a distance to a subject. According to an embodiment, the front camera module 206 may be implemented as an under-display camera (UDC) module.

According to an embodiment, the key input devices 216 and 217 (e.g., volume keys) may be disposed on the side surface 201C of the housing 201. According to an embodiment, the electronic device 101 may not include some or all of the aforementioned key input devices 216 and 217, and the key input devices 216 and 217 that are not included may be implemented in another form, such as a soft key, on the display 210. In some embodiments, the key input devices 216 and 217 may include a sensor module (not shown) disposed on a rear surface 210B of the housing 201.

According to an embodiment, a light emitting element (not shown) may be disposed, for example, on the front surface 201A of the housing 201. The light emitting element (not shown) may provide, for example, state information of the electronic device 101 in the form of light. In an embodiment, a light emitting element (not shown) may provide, for example, a light source interworking with the operation of the front camera module 206. The light emitting element (not shown) may include, for example, a light emitting diode (LED), an infrared (IR) LED, and/or a xenon lamp.

According to an embodiment, the connector holes 213 and 214 may include, for example, a first connector hole 213 capable of accommodating a connector (e.g., a USB connector) for transmitting and/or receiving power and/or data to and from an external electronic device, or a connector (e.g., an earphone jack) for transmitting and/or receiving audio signals to and from an external electronic device, and/or a second connector hole 214 capable of accommodating a storage device (e.g., a subscriber identification module (SIM) card or a secure digital (SD) memory card). According to an embodiment, the first connector hole 213 and/or the second connector hole 214 may be omitted. The connector holes 213 and 214 are not limited to the above-described structure, and various design modifications may be made depending on the structure of the electronic device 101, such as mounting only some of the connector holes or adding new connector holes.

The pen input device 215 (e.g., a stylus pen) may be guided and inserted into or detached from the interior of the housing 201 through a hole formed in a side surface of the housing 201, and may include a button for facilitating the detachment. A separate resonance circuit may be built into the pen input device 215 so as to interwork with an electromagnetic induction panel (e.g., a digitizer) included in the electronic device 101. The pen input device 215 may include an electro-magnetic resonance (EMR) method, an active electrical stylus (AES) method, and/or an electric coupled resonance (ECR) method.

According to an embodiment, the camera modules 206 and 207 and/or the sensor module (not shown) may be disposed in an internal space of the electronic device 101 so as to be in contact with the external environment through a designated area of the display 210 and the front plate 202. For example, the designated area may be an area of the display 210 where no pixels are disposed. As another example, the designated area may be an area of the display 210 where pixels are disposed. When viewed from above the display 210, at least a portion of the designated area may overlap with the camera modules 206 and 207 and/or the sensor module. As another example, some sensor modules may be disposed in the internal space of the electronic device to perform their functions without being visually exposed through the front plate 202.

Although the electronic device 101 disclosed in FIG. 2 and FIG. 3 has a bar-type or plate-type exterior, it is not limited thereto. For example, the illustrated electronic device may be a part of a rollable electronic device or a foldable electronic device. The term "rollable electronic device" may refer to an electronic device in which bending deformation of the display is possible, such that at least a portion thereof can be wound or rolled or received into the interior of a housing (e.g., the housing 210 of FIG. 2). According to the user's needs, the rollable electronic device may be used by expanding a screen display area through unfolding the display or exposing a larger area of the display to the outside. The "foldable electronic device" may refer to an electronic device capable of being folded such that two different areas of the display face each other or face in directions opposite to each other. Generally, in a portable state of a foldable electronic device, the display is folded such that two different areas face each other or face in opposing directions, and in an actual use state, the user may unfold the display so that the two different areas form a substantially flat plate shape. In an embodiment, the electronic device 101 according to an embodiment of the disclosure may be interpreted to include not only portable electronic devices such as smartphones, but also various other electronic devices such as notebook computers or home appliances.

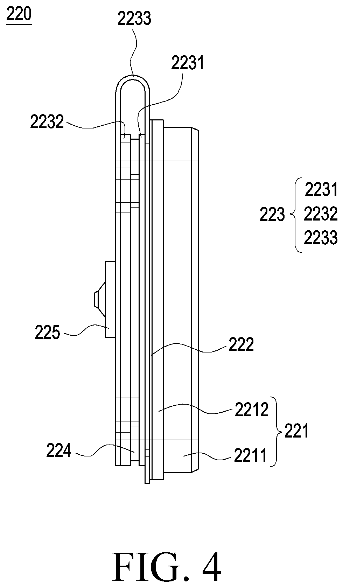

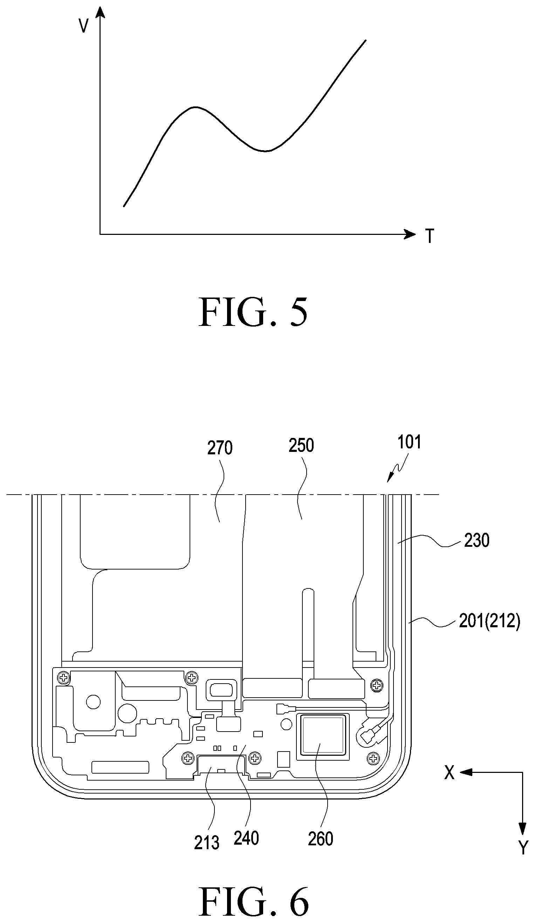

FIG. 4 is a view illustrating a button assembly according to an embodiment of the disclosure. FIG. 5 is a view illustrating a feedback curve in a case where a click sensation is provided according to a deformation of a switch upon an input to a button assembly, according to an embodiment of the disclosure.

According to an embodiment of the disclosure, an electronic device 101 may include a button assembly 220. The button assembly 220 of the disclosure may correspond to the key input devices 216 and 217 illustrated in FIG. 2.

Referring to FIG. 4, the button assembly 220 may include a body 221. The body 221 may include a button top 2211 for exposing at least a part of the button assembly 220 to the outside of the electronic device, and a flange 2212 for preventing the button assembly 220 from being withdrawn to the outside of the electronic device.

The button assembly 220 may include a substrate portion 223. The substrate portion 223 may have an elongated shape to be electrically connectable to other electronic components inside the electronic device 100. In addition, the substrate portion 223 may be formed to be flexible. According to an embodiment, the substrate portion 223 may include a first substrate 2231, a second substrate 2232, and a connection substrate 2233 connecting the first substrate 2231 and the second substrate 2232. A dome switch module 225 may be mounted on one surface of the substrate portion 223.

The button assembly 220 may include a sensor 222 for sensing a user input to the button assembly 220. The sensor 222 may be variously applied, for example, as an ultrasonic sensor (e.g., a fingerprint sensor), an optical sensor, a pressure sensor, a resistance sensor, or a capacitance sensor. According to an embodiment, the button assembly 220 may include an adhesive layer 224 for stacking the substrates included in the substrate portion 223 on each other.

In the embodiment of FIG. 4 described above, the dome switch module 225 may be configured to contact a switch electrode disposed relatively inward of the housing 201 compared to the button assembly 220. Referring to FIG. 4 and FIG. 5 together, when a user presses the button assembly 220, a dome portion of the dome switch module 225 undergoes deformation of being pressed and/or restored to provide a click feeling to the user, thereby allowing the user to recognize that the button assembly 220 has been pressed. As such, haptic feedback by the dome switch module may be achieved, for example, through physical deformation of a dome portion formed of a stainless steel material. Therefore, as illustrated in FIG. 5, the button assembly 220 using only the dome switch module 225 and the electronic device 101 including the same may merely feed back an input corresponding to the magnitude of the force F applied to the dome portion over time T, and thus can provide only a simple tactile sensation to the user.

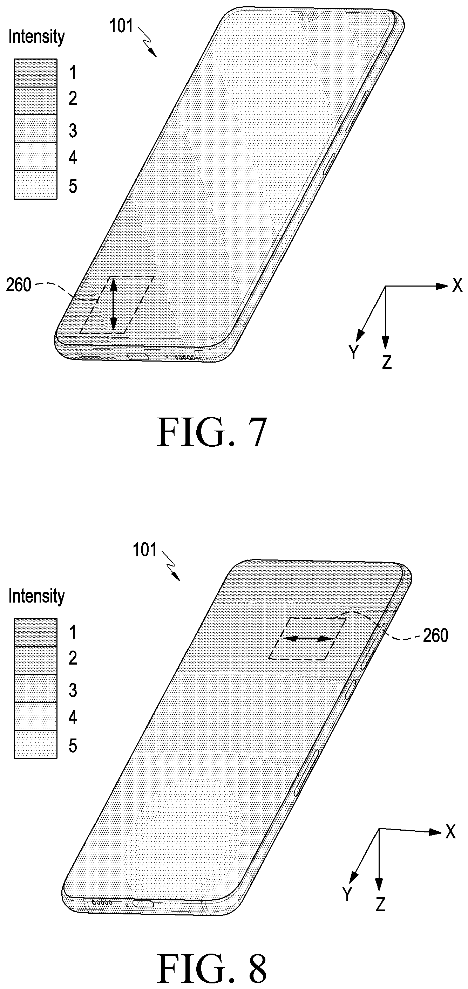

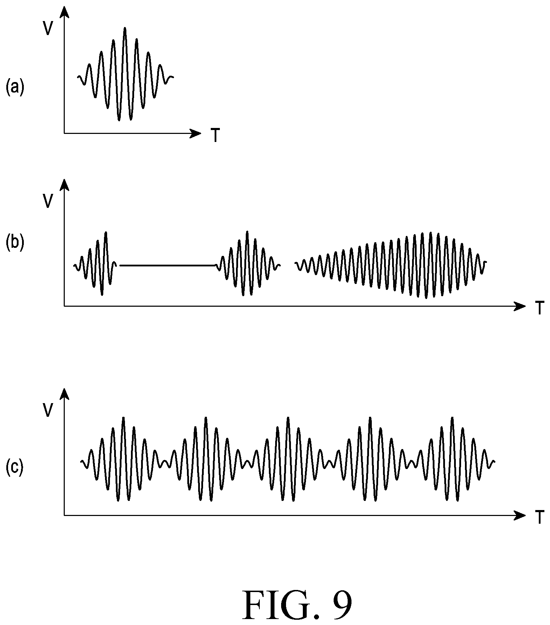

FIG. 6 is a view illustrating an interior of an electronic device, according to an embodiment of the disclosure. FIG. 7 is a view illustrating an intensity of vibration provided to an electronic device when a vibration motor vibrates, according to an embodiment of the disclosure. FIG. 8 is a view illustrating an intensity of vibration provided to an electronic device when a vibration motor vibrates, according to an embodiment of the disclosure. FIG. 9 is a graph illustrating various patterns of haptic feedback that can be provided through a button assembly, according to an embodiment of the disclosure.

Referring to FIG. 6, the electronic device 101 (e.g., the electronic device 101 of FIG. 1 or FIG. 2) may include a housing 201 (e.g., a side bezel structure 212), a bracket 230, at least one printed circuit board (or board assembly) 240, 250, at least one electronic component, and a battery 270. When including at least one printed circuit board 240, 250, the electronic device 101 may include at least one flexible printed circuit board 250 to electrically connect the printed circuit board(s) and/or the electronic component(s). According to an embodiment, the electronic device 101 may omit at least one of the components or additionally include another component (e.g., a connector hole 213). At least one of the components of the electronic device 101 may be the same as or similar to at least one of the components of the electronic device 101 of FIG. 1 to FIG. 3, and redundant descriptions will be omitted below.

The electronic device 101 may include a vibration motor 260 (e.g., the haptic module 179 of FIG. 1) as an electronic component. The vibration motor 260 may provide an alarm function to the electronic device 101 or provide a haptic function according to a user's input through the button assembly 220. When the vibration motor 260 operates, it can allow a user to sense vibration throughout the entire electronic device 101, as illustrated in FIG. 7 and FIG. 8. The embodiments of FIG. 7 and FIG. 8 classify the intensity of vibration generated in the electronic device 101 by region, where a higher dot density may mean a higher vibration intensity. Referring to FIG. 6 and FIG. 7 together, when the vibration motor 260 is disposed at a lower side of the electronic device 101, the vibration may be generally concentrated at a corner portion of the electronic device 101. Alternatively, when the vibration motor 260 is disposed as illustrated in FIG. 8, a region where vibration is sensed in the electronic device 101 may be changed. As such, by using the vibration motor 260, vibration may be transmitted to the entire palm or fingers.

However, since the haptic feedback to the user using the vibration motor 260 utilizes vibration from the vibration motor 260 spaced farther away when the user presses the button assembly 220, there may be a limitation in providing precise and diverse haptic feedback to the user. As illustrated in FIG. 7 and FIG. 8, due to various factors such as the arrangement and/or material of the electronic device 101 and/or various components included inside the electronic device 101, the position where the vibration motor 260 is disposed and the region with the strongest vibration may not correspond to each other.

In the disclosure, for example, by applying an input sensing technology to the button assembly 220 (e.g., key input devices 216, 217), localized haptic feedback may be provided when a user presses the button assembly 220, and more precise and diverse click sensations may be provided, for example, as illustrated in graphs (a), (b), and (c) of FIG. 9. Graphs (a), (b), and (c) of FIG. 9 illustrate voltage versus time graphs applied to the button assembly 220. For example, FIG. 9 (a) may illustrate providing temporary feedback vibration to the user through the button assembly 220, FIG. 9 (b) may illustrate providing irregular feedback vibration to the user through the button assembly 220, and FIG. 9 (c) may illustrate providing periodic feedback vibration to the user through the button assembly 220. Examples of providing feedback vibration to the user through the button assembly 220 are not limited to the above-described embodiments, but may vary. According to an embodiment, the feedback provided to the user through the button assembly 220 may be provided as part of providing various user experiences (UX) through the electronic device 101. The button assembly 220 may include a sensor 222 in the button assembly 220 to apply the input sensing technology.

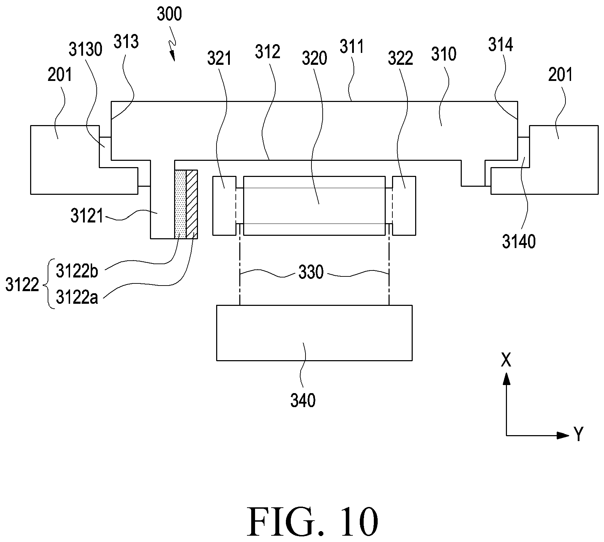

Hereinafter, button assemblies according to various embodiments of the disclosure will be described in detail through the embodiments of FIG. 10 through FIG. 24. Components described with reference to FIG. 10 through FIG. 24 may be partially or entirely identical to the components described with reference to FIG. 1 through FIG. 9. Hereinafter, detailed descriptions of the same components may be omitted.

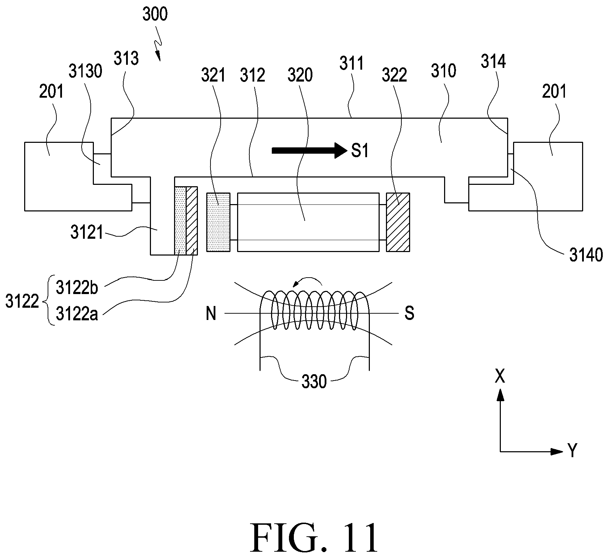

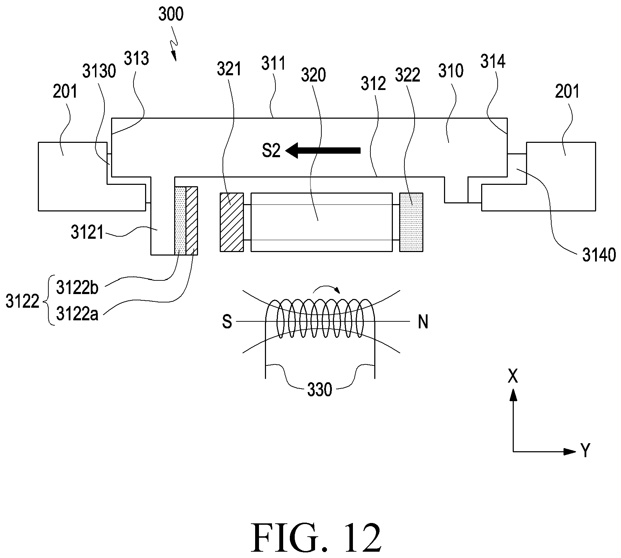

FIG. 10 is a view illustrating a button assembly according to an embodiment of the disclosure. FIG. 11 is a view illustrating the movement of a body portion in a first direction upon application of a current to a coil portion, according to an embodiment of the disclosure. FIG. 12 is a view illustrating the movement of a body portion in a second direction upon application of a current to a coil portion, according to an embodiment of the disclosure.

Referring to FIG. 10, the electronic device 101 may include a button assembly 300 (e.g., the key input devices 216 and 217 of FIG. 2, or the button assembly 220 of FIG. 4). The button assembly 300 may be disposed in the housing 201. According to an embodiment, the button assembly 300 may be disposed on a side bezel structure 212 of the housing 201. For example, the button assembly 300 may be visually exposed to the outside of the housing 201 through the side bezel structure 212. The side bezel structure 212 may be referred to as a "side portion." Here, the button assembly 300 may be referred to as a "key input device." In addition, the button assembly 300 may be referred to as an "input device." In addition, the button assembly 300 may be referred to as a "haptic device" in terms of allowing a user to experience tactile sensation, kinesthetic sensation, and force. In addition, the button assembly 300 may be referred to as a "feedback device" in terms of providing a click feeling corresponding to a user's input.

The button assembly 300 may include a body portion 310. The body portion 310 may be visually exposed to the outside of the housing 201. The body portion 310 may be configured to be touchable. According to an embodiment, the body portion 310 may include a first surface 311 visually exposed to the outside of the housing 201, and a second surface 312 facing in a direction opposite to the first surface 311 (or facing an internal space of the housing 201). A user may input a signal to the button assembly 300 by touching and/or manipulating the first surface 311 of the body portion 310. When the user touches the body portion 310, the body portion 310 may be configured to be movable in a first direction (e.g., a +Y-axis direction) or a second direction (e.g., a -Y-axis direction) to provide haptic feedback to the user. Although FIG. 10 illustrates an embodiment in which the first surface 311 of the body portion 310 is stepped with respect to one surface of the housing 201, an embodiment in which the first surface 311 of the body portion 310 is formed on substantially the same plane as one surface of the housing 201 may also be included. According to an embodiment, a window (not shown) may be disposed outside the housing 201 and the body portion 310 such that the body portion 310 is visually exposed only to the outside of the electronic device 101, and configured such that a user indirectly performs a touch input with respect to the body portion 310 through the window.

The button assembly 300 may include support members 3130 and 3140. The support members 3130 and 3140 may be disposed between the body portion 310 and the housing 201. According to an embodiment, the support members 3130 and 3140 may include a third surface 313 forming one end portion of the body portion 310 and a fourth surface 314 forming another end portion of the body portion 310. According to an embodiment, the support members 3130 and 3140 may include a first support member 3130 supporting the third surface 313 of the body portion 310 and a second support member 3140 supporting the fourth surface 314 of the body portion 310. For example, the support members 3130 and 3140 may include a rubber material. When a press is applied to the body portion 310, a portion of the support members 3130 and 3140 may be deformed. According to an embodiment, the support members 3130 and 3140 may support at least a portion of the second surface 312 of the body portion 310. Here, the support members 3130 and 3140 may be referred to as "cushioning members" in terms of having a function of mitigating an impact applied to the housing 201 and/or the button assembly 300 when the body portion 310 of the button assembly 300 moves. The support members 3130 and 3140 may be referred to as "elastic members" in terms of having a function of providing an elastic restoring force to restore the body portion 310 of the button assembly 300 to an original state before movement after the body portion 310 moves.

The button assembly 300 may include a first magnetic member 3122. According to an embodiment, the button assembly 300 may include the first magnetic member 3122 disposed on one surface of the body portion 310. Here, the magnetic member may be referred to as a "magnetic substance". For example, an example of the magnetic substance may correspond to a magnet or a permanent magnet, but is not limited thereto. For example, any magnetic substance that maintains polarities (e.g., maintaining opposite polarities 3122a and 3122b) may be included in the magnetic member.

According to an embodiment, the first magnetic member 3122 may be disposed on one surface of a first protrusion 3121 protruding from the body portion 310 toward an internal space of the housing 201. In this case, a direction of a magnetic field formed by a polarity of the first magnetic member 3122 may be substantially perpendicular to a second surface 312 of the body portion 310.

The button assembly 300 may include a coil portion 320. According to an embodiment, the coil portion 320 may face the first magnetic member 3122. According to an embodiment, the coil portion 320 may be configured to be fixedly disposed on another structure (e.g., the bracket 230 of FIG. 6) disposed inside the housing 201. The coil portion 320 may include a coil wound a plurality of times. For example, the coil portion 320 may include a solenoid coil, which is a long cylindrical coil formed by winding a conductive wire uniformly.

According to an embodiment, the coil portion 320 may include a first yoke 321 disposed at one end portion thereof. The first yoke 321 may be configured to face the first magnetic member 3122. The first yoke 321 may serve to concentrate a magnetic field generated when a current is applied to the coil portion 320. According to another embodiment, the coil portion 320 may include a second yoke 322 disposed at the other end portion. The second yoke 322 may be disposed on an opposite side of the first yoke 321. Similarly to the first yoke 321, the second yoke 322 may also serve to concentrate a magnetic field generated when a current is applied to the coil portion 320. For example, the first yoke 321 and/or the second yoke 322 may be provided using a magnetic material including an iron family metal such as iron, steel, stainless steel, nickel, or cobalt, rare earths, and/or other magnetizable substances. In addition, any material capable of acquiring polarity by a magnetic field formed around the first yoke 321 may be included in the magnetic material constituting the first yoke 321, and any material capable of acquiring polarity by a magnetic field formed around the second yoke 322 may be included in the magnetic material constituting the second yoke 322. When no magnetic field is formed around the first yoke 321, the first yoke 321 may not have polarity, and when no magnetic field is formed around the second yoke 322, the second yoke 322 may also not have polarity.

The button assembly 300 may include a driving circuit (or a driver IC) 340. According to an embodiment, the button assembly 300 may include the driving circuit 340 electrically connected to the coil portion 320 and configured to control a flow of current flowing through the coil portion 320 to generate an attractive force and/or a repulsive force between the first magnetic member 3122 and the coil portion 320. Herein, although the driving circuit 340 is described as a component included in the button assembly 300, according to an embodiment, it may be a component included in the button assembly 300, or may be disposed outside the button assembly 300 and on a printed circuit board within the electronic device 101. The driving circuit 340 may be referred to as a processor (e.g., the processor 120 of FIG. 1). Alternatively, the driving circuit 340 may correspond to an auxiliary processor (e.g., the auxiliary processor 123 of FIG. 1) provided separately from a main processor (e.g., the main processor 121 of FIG. 1) disposed within the electronic device 101. In addition, the electronic device 101 may further include a memory (e.g., the memory 130 of FIG. 1) storing instructions configured to be executed by the processor to cause the electronic device to perform haptic feedback.

According to an embodiment, the button assembly 300 may include a connection coil 330 electrically connecting the coil portion 320 and the driving circuit 340. According to an embodiment, the connection coil 330 may be integrally connected to a coil included in the coil portion 320. The connection coil 330 may be provided as a pair between the coil portion 320 and the driving circuit 340. In addition, the driving circuit 340 may apply a current to the coil portion 320 through the pair of connection coils 330, and switch the direction of a magnetic field formed in the coil portion 320 by switching a direction in which the current flows (e.g., clockwise → counterclockwise, or counterclockwise → clockwise).

When a current flows through the coil portion 320, a magnetic field may be formed in one direction at the center of the coil portion 320 by Ampère's right-hand screw rule. According to an embodiment, when a first magnetic member 3122 is disposed on one surface of the body portion 310 (e.g., a surface of the first protrusion perpendicular to the second surface 312 of the body portion 310), and one end of the coil portion 320 is disposed to face the first magnetic member 3122, a magnetic field formed by the coil portion 320 and a magnetic field formed by the first magnetic member 3122 may interact with each other. According to the interaction, an attractive force or a repulsive force may be generated between the first magnetic member 3122 and the coil portion 320, thereby enabling the body portion 310 of the button assembly 300 to move.

When an input is applied to the button assembly 300 by a user touching the button assembly 300, and the input corresponds to an input for executing a preset algorithm and/or exceeds a predetermined value (e.g., referring to a look-up table), a signal for a haptic operation may be transmitted to the driving circuit 340. In this case, the type of signal for the haptic operation may be various and may be stored in the memory. The driving circuit 340 may move the body portion 310 of the button assembly 300 by controlling the magnitude of a current flowing through the coil portion 320 and/or the application direction of the current in accordance with the signal for the haptic operation. The user may feel various vibration patterns according to the movement of the body portion 310, and in this manner, the user may be provided with various haptic feedbacks. As the body portion 310 of the button assembly 300 of the electronic device 101 moves under the control of the driving circuit 340, various vibration patterns, such as the graphs of (a), (b), and (c) shown in FIG. 9 or other various vibration patterns not shown in FIG. 9, may be provided to the user.

Referring to FIG. 11 and FIG. 12, the button assembly 300 according to an embodiment may be disposed such that a second pole 3122b (e.g., N-pole) of the first magnetic member 3122 contacts one surface of the body portion 310 (e.g., a surface of the first protrusion perpendicular to the second surface 312 of the body portion 310), and a first pole 3122a (e.g., S-pole) faces in a direction opposite to the second pole 3122b. In this case, as illustrated in FIG. 11, when a current flowing from the connection coil 330 in a counterclockwise direction enters and exits the coil portion 320, and one end of the coil portion 320 has a polarity (e.g., N-pole) different from the first pole 3122a (e.g., S-pole) of the first magnetic member 3122, an attractive force may be generated between the first magnetic member 3122 and the coil portion 320. As illustrated in FIG. 12, when a current flowing from the connection coil 330 in a clockwise direction enters and exits the coil portion 320, and one end of the coil portion 320 has the same polarity (e.g., S-pole) as the first pole 3122a (e.g., S-pole) of the first magnetic member 3122, a repulsive force may be generated between the first magnetic member 3122 and the coil portion 320. When the coil portion 320 is fixed to the inner side of the housing 201 (e.g., fixed to the bracket 230 of FIG. 6), the body portion 310 of the button assembly 300 moves in a first direction (S1) under the attractive force as illustrated in FIG. 11, and the body portion 310 of the button assembly 300 moves in a second direction (S2) under the repulsive force as illustrated in FIG. 12. Meanwhile, the arrangement of polarities illustrated in FIG. 11 and FIG. 12 may vary depending on the embodiments.

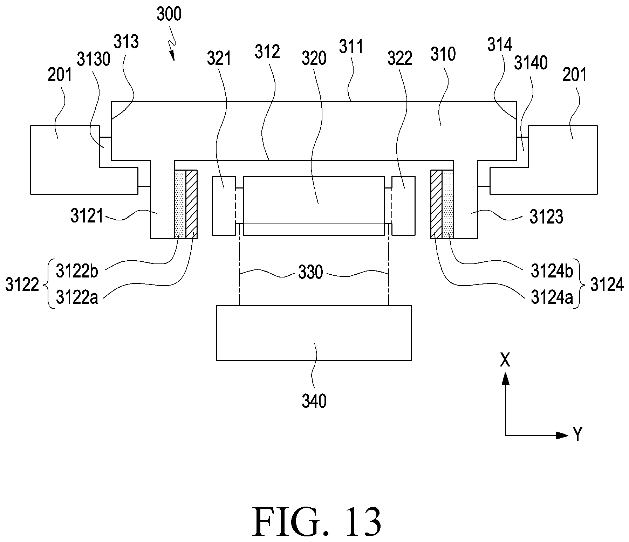

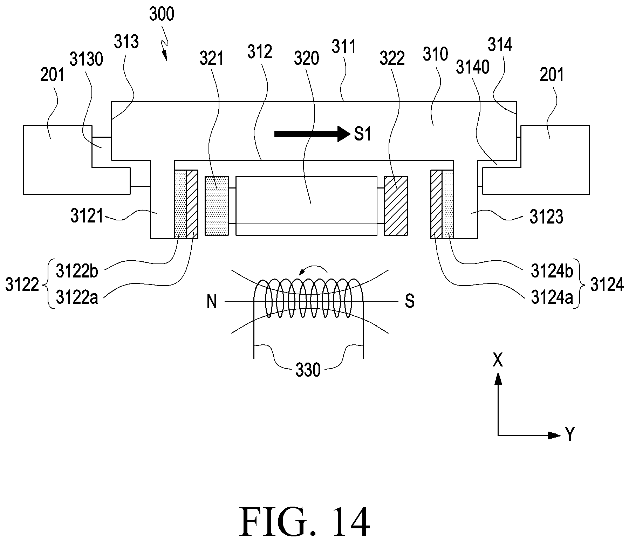

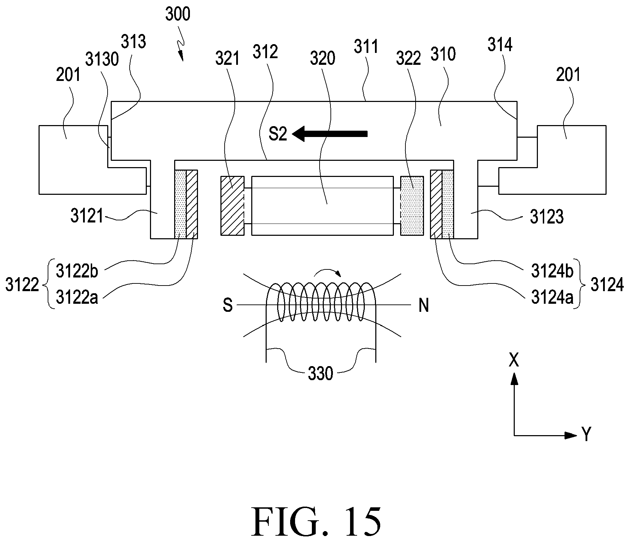

FIG. 13 is a view illustrating a button assembly according to an embodiment of the disclosure. FIG. 14 is a view illustrating the movement of a body portion in a first direction upon application of a current to a coil portion, according to an embodiment of the disclosure. FIG. 15 is a view illustrating the movement of a body portion in a second direction upon application of a current to a coil portion, according to an embodiment of the disclosure.

The embodiments of FIG. 13 to FIG. 15 may further include a second protrusion 3123 and a second magnetic member 3124 disposed on the second protrusion 3123, compared to the embodiments of FIG. 10 to FIG. 12. In describing the embodiments of FIG. 13 to FIG. 15, the description of components overlapping with those included in the embodiments of FIG. 10 to FIG. 12 may be omitted.

In the embodiments of FIG. 13 to FIG. 15, the button assembly 300 may include a first magnetic member 3122 and a second magnetic member 3124. According to an embodiment, the button assembly 300 may include a first magnetic member 3122 disposed on one surface of the body portion 310 and a second magnetic member 3124 disposed on another surface of the body portion 310. For example, the first magnetic member 3122 may be disposed on a surface of the first protrusion 3121 perpendicular to the second surface 312 of the body portion 310, and the second magnetic member 3124 may be disposed on a surface of the second protrusion 3123 perpendicular to the second surface 312 of the body portion 310. Here, both the first magnetic member 3122 and the second magnetic member 3124 may be referred to as a magnetic substance. For example, a permanent magnet may correspond to an example of the magnetic substance. The first magnetic member 3122 and the second magnetic member 3124 may be disposed to face each other. Here, the fact that the first magnetic member 3122 and the second magnetic member 3124 face each other may mean that the same polarities are disposed to face each other. Referring to FIG. 13, in the button assembly 300 according to an embodiment, a second pole 3122b (e.g., N-pole) of the first magnetic member 3122 may be in contact with the first protrusion 3121, with a first pole 3122a (e.g., S-pole) facing in a direction opposite to the second pole 3122b, and a fourth pole 3124b (e.g., N-pole) of the second magnetic member 3124 may be in contact with the second protrusion 3123, with a third pole 3124a (e.g., S-pole) facing in a direction opposite to the fourth pole 3124b. Of course, the arrangement of the polarities illustrated herein may vary depending on the embodiments.

According to an embodiment, one end of the coil portion 320 may face the first magnetic member 3122, and the other end may face the second magnetic member 3124. According to another embodiment, the coil portion 320 may include a first yoke 321 disposed at the one end and a second yoke 322 disposed at the other end. The first yoke 321 may be configured to face the first magnetic member 3122, and the second yoke 322 may be configured to face the second magnetic member 3124.

When a current flows through the coil portion 320, if an attractive force (or a repulsive force) is generated between the first magnetic member 3122 and the coil portion 320, a repulsive force (or an attractive force) may be generated between the second magnetic member 3124 and the coil portion 320. The driving circuit 340 may apply a current to the coil portion 320 through a pair of connection coils 330, and may switch the direction of a magnetic field formed in the coil portion 320 by switching a direction in which the current flows (e.g., clockwise → counterclockwise, or counterclockwise → clockwise). When the direction of the magnetic field formed in the coil portion 320 changes, a repulsive force (or an attractive force) may be generated between the first magnetic member 3122 and the coil portion 320, and an attractive force (or a repulsive force) may be generated between the second magnetic member 3124 and the coil portion 320.

Referring to FIG. 14 and FIG. 15, in the button assembly 300 according to an embodiment, a second pole 3122b (e.g., N-pole) of the first magnetic member 3122 may be in contact with one surface of the body portion 310 (e.g., a surface of the first protrusion perpendicular to a second surface 312 of the body portion 310), with a first pole 3122a (e.g., S-pole) facing in a direction opposite to the second pole 3122b, and a fourth pole 3124b (e.g., N-pole) of the second magnetic member 3124 may be in contact with the other surface of the body portion 310 (e.g., a surface of the second protrusion perpendicular to the second surface 312 of the body portion 310), with a third pole 3124a (e.g., S-pole) facing in a direction opposite to the fourth pole 3124b. In this case, as illustrated in FIG. 14, when a current entering and exiting in a counterclockwise direction from the connection coil 330 flows through the coil portion 320, one end of the coil portion 320 has a polarity (e.g., N-pole) different from a first pole 3122a (e.g., S-pole) of the first magnetic member 3122, so that an attractive force may be generated between the first magnetic member 3122 and the coil portion 320, and the other end of the coil portion 320 has the same polarity (e.g., S-pole) as a third pole 3124a (e.g., S-pole) of the second magnetic member 3124, so that a repulsive force may be generated between the second magnetic member 3124 and the coil portion 320. As illustrated in FIG. 15, when a current entering and exiting in a clockwise direction from the connection coil 330 flows through the coil portion 320, if one end of the coil portion 320 has the same polarity (e.g., S-pole) as a first pole 3122a (e.g., S-pole) of the first magnetic member 3122, a repulsive force may be generated between the first magnetic member 3122 and the coil portion 320, and if the other end of the coil portion 320 has a polarity (e.g., N-pole) different from a third pole 3124a (e.g., S-pole) of the second magnetic member 3124, an attractive force may be generated between the second magnetic member 3124 and the coil portion 320. When the coil portion 320 is fixed to the inside of the housing 201 (e.g., fixed to the bracket 230 of FIG. 6), the body portion 310 of the button assembly 300 moves in a first direction S1 as illustrated in FIG. 14, and the body portion 310 of the button assembly 300 moves in a second direction S2 as illustrated in FIG. 15. Meanwhile, the arrangement of the polarities illustrated in FIG. 14 and FIG. 15 may vary depending on the embodiments.

In the button assembly 300 according to the embodiments of FIG. 13 to FIG. 15, attractive and repulsive forces due to magnetic force act simultaneously at both ends including one end and the other end, so that, unlike the button assembly 300 according to the embodiments of FIG. 10 to FIG. 12 in which an attractive force or a repulsive force due to magnetic force acts only at one end, the button assembly 300 may move by receiving a greater force (e.g., twice the force).

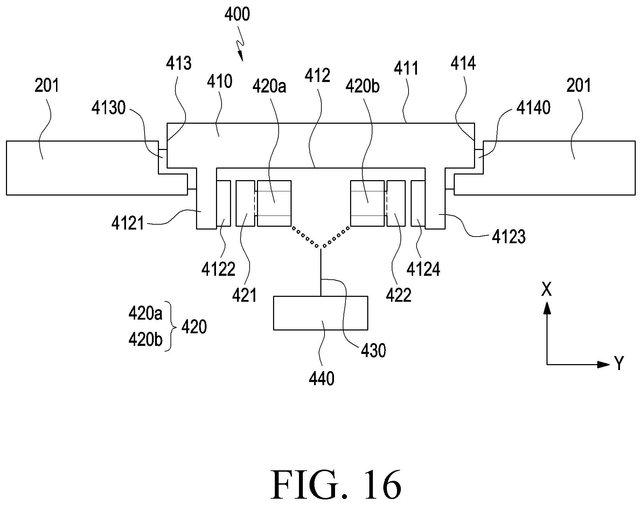

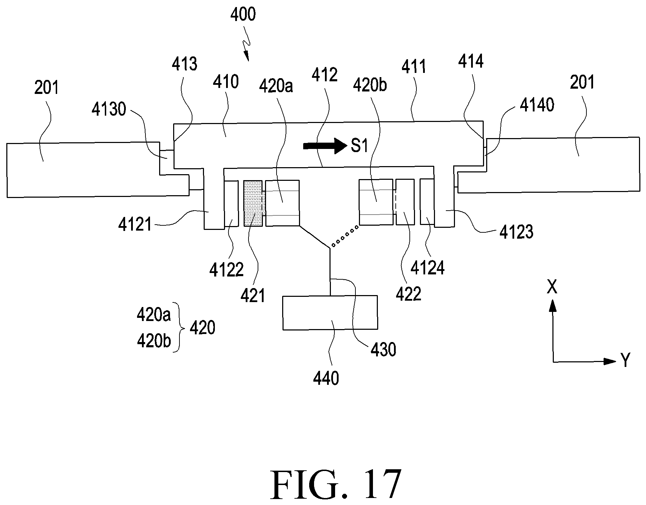

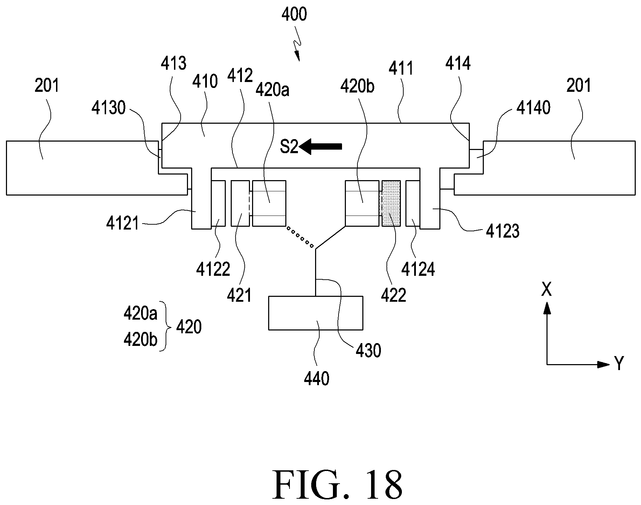

FIG. 16 is a view illustrating a button assembly according to an embodiment of the disclosure. FIG. 17 is a view illustrating the movement of a body portion in a first direction upon application of a current to a coil portion, according to an embodiment of the disclosure. FIG. 18 is a view illustrating the movement of a body portion in a second direction upon application of a current to a coil portion, according to an embodiment of the disclosure.

Referring to FIG. 16, the electronic device 101 may include a button assembly 400 (e.g., the key input devices 216 and 217 of FIG. 2, the button assembly 220 of FIG. 4, and the button assembly 300 of FIG. 10 to FIG. 15). The button assembly 400 may be disposed in the housing 201. According to an embodiment, the button assembly 400 may be disposed on a side bezel structure 212 of the housing 201. For example, the button assembly 400 may be visually exposed to the outside of the housing 201 through the side bezel structure 212. The side bezel structure 212 may be referred to as a "side portion." Here, the button assembly 400 may be referred to as a "key input device." In addition, the button assembly 400 may be referred to as an "input device." In addition, the button assembly 400 may be referred to as a "haptic device" in terms of allowing the user to experience a tactile sensation, a kinesthetic sensation, and a force. Further, the button assembly 400 may be referred to as a "feedback device" in terms of providing a click sensation corresponding to an input to the user.

The button assembly 400 may include a body portion 410. The body portion 410 may be visually exposed to the outside of the housing 201. The body portion 410 may be configured to be touchable. According to an embodiment, the body portion 410 may include a first surface 411 visually exposed to the outside of the housing 201, and a second surface 412 facing in a direction opposite to the first surface 411 (or facing an internal space of the housing 201). The user may input a signal to the button assembly 400 by touching and/or manipulating the first surface 411 of the body portion 410. When the user touches the body portion 410, the body portion 410 may be configured to be movable in a first direction or a second direction to provide haptic feedback to the user.

The button assembly 400 may include support members 4130 and 4140. The support members 4130 and 4140 may be disposed between the body portion 410 and the housing 201. According to an embodiment, the support members 4130 and 4140 may include a third surface 413 forming one end of the body portion 410 and a fourth surface 414 forming the other end. According to an embodiment, the support members 4130 and 4140 may include a first support member 4130 supporting the third surface 413 of the body portion 410, and a second support member 4140 supporting the fourth surface 414 of the body portion 410. For example, the support members 4130 and 4140 may include a rubber material. When pressure is applied to the body portion 410, a portion of the support members 4130 and 4140 may be deformed. Here, the support members 4130 and 4140 may be referred to as "cushioning members" in terms of having a function of mitigating an impact applied to the housing 201 and/or the button assembly 400 when the body portion 410 of the button assembly 400 moves. The support members 4130 and 4140 may be referred to as "elastic members" in terms of having a function of providing an elastic restoring force to restore the body portion 410 of the button assembly 400 to its original state prior to movement after the body portion 410 moves.

The button assembly 400 may include a first magnetic member 4122. According to an embodiment, the button assembly 400 may include the first magnetic member 4122 disposed on one surface of the body portion 410. Here, the term "magnetic member" may be referred to as a "magnetic material." For example, examples of the magnetic material may include iron family metals such as iron, steel, stainless steel, nickel, and cobalt, rare earths, and/or other magnetizable substances. In addition, any material capable of experiencing an attractive force by a magnetic field generated when a current flows through a coil portion 420 may be included in the magnetic material of the first magnetic member 4122.

According to an embodiment, the first magnetic member 4122 may be disposed on one surface of a first protrusion 4121 protruding from the body portion 410 toward the internal space of the housing 201. In this case, the direction of a magnetic field formed by the polarity of the first magnetic member 4122 may be perpendicular to the second surface 412 of the body portion 410.

The button assembly 400 may include a first magnetic member 4122 and a second magnetic member 4124. According to an embodiment, the button assembly 400 may include the first magnetic member 4122 disposed on one surface of the body portion 410 and the second magnetic member 4124 disposed on the other surface of the body portion 410. For example, the first magnetic member 4122 may be disposed on a surface of the first protrusion 4121 perpendicular to the second surface 412 of the body portion 410, and the second magnetic member 4124 may be disposed on a surface of the second protrusion 4123 perpendicular to the second surface 412 of the body portion 410. Here, both the first magnetic member 4122 and the second magnetic member 4124 may be referred to as a "magnetic material." For example, examples of the magnetic material may include iron family metals such as iron, steel, stainless steel, nickel, and cobalt, rare earths, and/or other magnetizable substances. In addition, any material capable of experiencing an attractive force by a magnetic field generated when a current flows through the coil portion 420 may be included in the magnetic material of the first magnetic member 4122 and the second magnetic member 4122.

The button assembly 400 may include a coil portion 420. According to an embodiment, the coil portion 420 may face the first magnetic member 4122. According to an embodiment, the coil portion 420 may be configured to be fixedly disposed on another structure (e.g., the bracket 230 of FIG. 6) disposed inside the housing 201. The coil portion 420 may include a coil wound a plurality of turns. For example, the coil portion 420 may include a solenoid coil, which is a long cylindrical coil formed by uniformly winding a conductive wire.

In the embodiments of FIG. 16 to FIG. 18, the coil portion 420 may include a first coil portion 420a and a second coil portion 420b. The first coil portion 420a may be disposed at a position facing the first magnetic member 4122, and the second coil portion 420b may be spaced apart from the first coil portion 420a in a first direction substantially parallel to a longitudinal direction of the body portion. Further, the second coil portion 420b may be disposed at a position facing the second magnetic member 4124. Each of the first coil portion 420a and the second coil portion 420b may include a solenoid coil, which is a long cylindrical coil formed by uniformly winding a conductive wire.

According to an embodiment, the coil portion 420 may include a first yoke 421 disposed at one end of the first coil portion 420a. The first yoke 421 may be configured to face the first magnetic member 4122. The first yoke 421 may serve to concentrate a magnetic field generated when a current is applied to the first coil portion 420a. According to another embodiment, the coil portion 420 may include a second yoke 422 disposed at one end of the second coil portion 420b. The second yoke 422 may face in a direction opposite to the first yoke 421. Similar to the first yoke 421, the second yoke 422 may also serve to concentrate a magnetic field generated when a current is applied to the second coil portion 420b. For example, the first yoke 421 and/or the second yoke 422 may include an iron family metal such as iron, steel, stainless steel, nickel, or cobalt, rare earths, and/or other magnetic materials capable of being magnetized. In addition, any material having a polarity generated by a magnetic field formed around the first yoke 421 may be included in the magnetic material constituting the first yoke 421, and any material having a polarity generated by a magnetic field formed around the second yoke 422 may be included in the magnetic material constituting the second yoke 422. The first yoke 421 may have no polarity when no magnetic field is formed around the first yoke 421, and the second yoke 422 may also have no polarity when no magnetic field is formed around the second yoke 422.

The button assembly 400 may include a driving circuit 440. According to an embodiment, the button assembly 400 may include a driving circuit 440 electrically connected to the coil portion 420 and configured to control a flow of current flowing through the coil portion 420 to generate an attractive force and/or a repulsive force between the first magnetic member 4122 and the coil portion 420. Here, although the driving circuit 440 has been described as a component included in the button assembly 400, it may be included in the button assembly 400 or, depending on an embodiment, disposed outside the button assembly 400 and on a printed circuit board within the electronic device 101.

According to an embodiment, the button assembly 400 may include a connection coil 430 electrically connecting the coil portion 420 and the driving circuit 440. According to an embodiment, the connection coil 430 may be integrally connected to a coil included in the coil portion 420. According to an embodiment, the connection coil 430 may be electrically connected to a first coil portion 420a and may also be electrically connected to a second coil portion 420b. The driving circuit 440 may electrically connect the first coil portion 420a and the connection coil 430, or selectively connect the second coil portion 420b and the connection coil 430. A pair of connection coils 430 may be provided between the first coil portion 420a and the driving circuit 440, and a pair of connection coils 430 may be provided between the second coil portion 420b and the driving circuit 440. The driving circuit 440 may apply a current to the first coil portion 420a and the connection coil 430 via the pair of connection coils 430, and switch a direction of a magnetic field formed in the first coil portion 420a by switching a direction in which the current flows (e.g., clockwise → counterclockwise, or counterclockwise → clockwise). The driving circuit 440 may apply a current to the second coil portion 420b and the connection coil 430 through the pair of connection coils 430, and switch a direction of a magnetic field formed in the second coil portion 420b by switching a direction in which the current flows (e.g., clockwise → counterclockwise, or counterclockwise → clockwise).

When a current flows through the first coil portion 420a or the second coil portion 420b, a magnetic field may be formed in one direction at a center of the coil portion 420 independently of each other by Ampere's right-hand screw rule. According to an embodiment, when a first magnetic member 4122 is disposed on one surface of the body portion 410 (e.g., a surface of the first protrusion perpendicular to a second surface 412 of the body portion 410) and one end of the first coil portion 420a is disposed to face the first magnetic member 4122, an attractive force may be generated between the first magnetic member 4122 and the first coil portion 420a by a magnetic field formed by the first coil portion 420a, thereby enabling the body portion 310 of the button assembly 300 to move. According to an embodiment, when a second magnetic member 4124 is disposed on the other surface of the body portion 410 (e.g., a surface of the second protrusion perpendicular to the second surface 412 of the body portion 410) and one end of the second coil portion 420b is disposed to face the second magnetic member 4124, an attractive force may be generated between the second magnetic member 4124 and the second coil portion 420b by a magnetic field formed by the second coil portion 420b, thereby enabling the body portion 310 of the button assembly 300 to move.

As illustrated in FIG. 17, when a current flows from the connection coil 430 to the first coil portion 420a, thereby exhibiting a polarity (e.g., an N-pole or an S-pole) at one end of the first coil portion 420a, an attractive force may be generated between the first magnetic member 4122 and the first coil portion 420a. In this case, a current applied from the connection coil 430 to the first coil portion 420a may flow in a clockwise direction or a counterclockwise direction, and thus, an attractive force may be generated between the first magnetic member 4122 and the first coil portion 420a regardless of a polarity formed at one end of the first coil portion 420a. As illustrated in FIG. 18, when a current flows from the connection coil 430 to the second coil portion 420b, thereby exhibiting a polarity (e.g., an N-pole or an S-pole) at one end of the second coil portion 420b, an attractive force may be generated between the second magnetic member 4124 and the second coil portion 420b. In this case, a current applied from the connection coil 430 to the second coil portion 420b may flow in a clockwise direction or a counterclockwise direction, and thus, an attractive force may be generated between the second magnetic member 4124 and the second coil portion 420b regardless of a polarity formed at one end of the second coil portion 420b. According to the embodiment illustrated in FIG. 17, the body portion 410 of the button assembly 400 moves in a first direction (S1), and according to the embodiment illustrated in FIG. 18, the body portion 410 of the button assembly 400 moves in a second direction (S2).

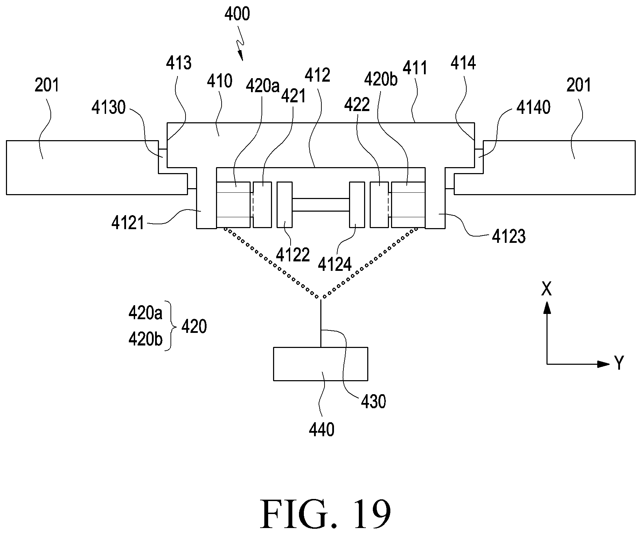

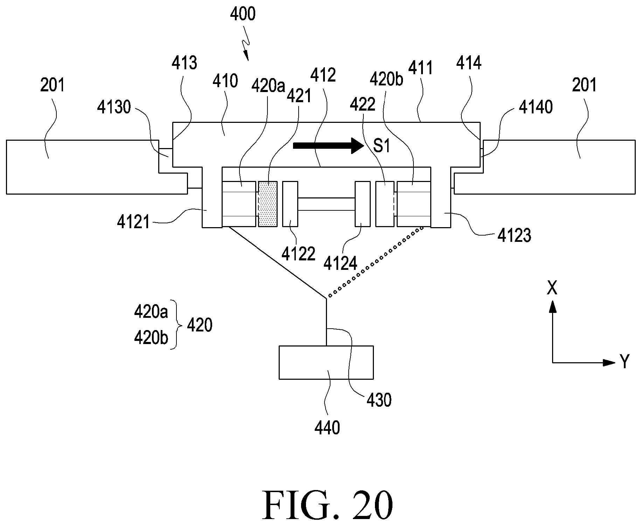

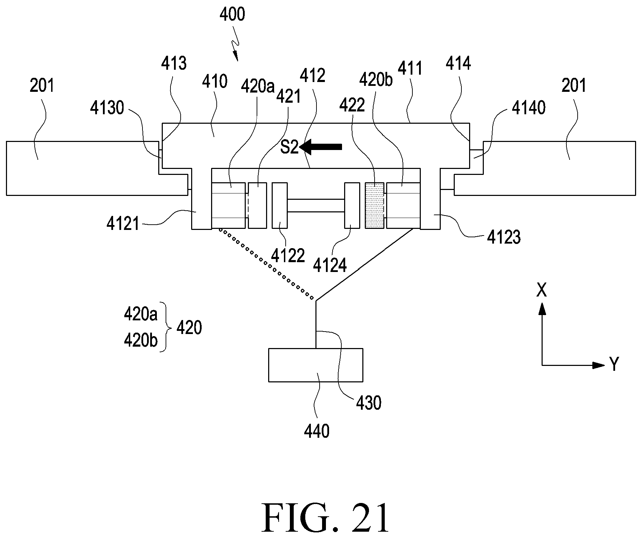

FIG. 19 is a view illustrating a button assembly according to an embodiment of the disclosure. FIG. 20 is a view illustrating the movement of a body portion in a first direction upon application of a current to a coil portion, according to an embodiment of the disclosure. FIG. 21 is a view illustrating the movement of a body portion in a second direction upon application of a current to a coil portion, according to an embodiment of the disclosure. Components described with reference to FIG. 19 through FIG. 21 may be partially or entirely identical to the components described with reference to FIG. 16 through FIG. 18. Hereinafter, a detailed description of the same components may be omitted.

FIG. 19 through FIG. 21 illustrate an embodiment in which the first magnetic member 4122 and the second magnetic member 4124 are not disposed on the body portion 410, but the first coil portion 420a and the second coil portion 420b are disposed on the body portion 410. That is, compared with the embodiments illustrated in FIG. 16 through FIG. 18, the positions of the first magnetic member 4122 and the first coil portion 420a may be interchanged with each other, and the positions of the second magnetic member 4124 and the second coil portion 420b may be interchanged with each other.

According to an embodiment, the first magnetic member 4122 and the second magnetic member 4124 may be fixedly disposed inside the housing (e.g., the bracket 230 of FIG. 6). Although FIG. 19 through FIG. 21 illustrate the first magnetic member 4122 and the second magnetic member 4124 as being connected to each other, the first magnetic member 4122 and the second magnetic member 4124 may be fixedly disposed inside the housing (e.g., the bracket 230 of FIG. 6) without being connected to each other, according to the embodiment.

A first coil portion 420a may be disposed on one surface of a first protrusion 4121 protruding from the body portion 410 toward an internal space of the housing 201. A second coil portion 420b may be disposed on one surface of a second protrusion 4123 protruding from the body portion 410 toward the internal space of the housing 201.

When a current flows through the first coil portion 420a or the second coil portion 420b, a magnetic field may be formed in one direction at the center of the coil portion 420 in each of the first coil portion 420a and the second coil portion 420b independently of each other by Ampère's right-hand screw rule. According to an embodiment, when the first coil portion 420a is disposed on one surface of the body portion 410 (e.g., a surface of the first protrusion perpendicular to the second surface 412 of the body portion 410) and one end of the first magnetic member 4122 is disposed to face the first coil portion 420a, an attractive force may be generated between the first magnetic member 4122 and the first coil portion 420a by a magnetic field formed by the first coil portion 420a, thereby enabling the body portion 410 of the button assembly 400 to move. According to an embodiment, when the second coil portion 420b is disposed on another surface of the body portion 410 (e.g., a surface of the second protrusion perpendicular to the second surface 412 of the body portion 410) and one end of the second magnetic member 4124 is disposed to face the second coil portion 420b, an attractive force may be generated between the second magnetic member 4124 and the second coil portion 420b by a magnetic field formed by the second coil portion 420b, thereby enabling the body portion 410 of the button assembly 400 to move.

As illustrated in FIG. 20, when a current flows from the connection coil 430 to the first coil portion 420a to exhibit a polarity (e.g., an N-pole or an S-pole) at one end of the first coil portion 420a, an attractive force may be generated between the first magnetic member 4122 and the first coil portion 420a. In this case, the current applied from the connection coil 430 to the first coil portion 420a may flow in a clockwise or counterclockwise direction, and accordingly, regardless of the polarity formed at one end of the first coil portion 420a, an attractive force may be generated between the first magnetic member 4122 and the first coil portion 420a. As illustrated in FIG. 21, when a current flows from the connection coil 430 to the second coil portion 420b to exhibit a polarity (e.g., an N-pole or an S-pole) at one end of the second coil portion 420b, an attractive force may be generated between the second magnetic member 4124 and the second coil portion 420b. In this case, the current applied from the connection coil 430 to the second coil portion 420b may flow in a clockwise or counterclockwise direction, and accordingly, regardless of the polarity formed at one end of the second coil portion 420b, an attractive force may be generated between the second magnetic member 4124 and the second coil portion 420b. According to the embodiment illustrated in FIG. 20, the body portion 410 of the button assembly 400 may move in a first direction S1, and according to the embodiment illustrated in FIG. 21, the body portion 410 of the button assembly 400 may move in a second direction S2.

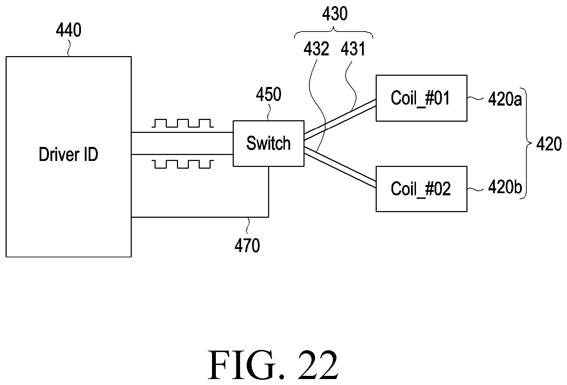

FIG. 22 is a block diagram illustrating an electrical connection relationship between a driving circuit and a coil portion 420, according to an embodiment of the disclosure.

FIG. 22 may illustrate an electrical connection relationship among components of the button assembly 400 for selectively applying a current to the first coil portion 420a and the second coil portion 420b using the driving circuit 440, according to the embodiments of FIG. 16 to FIG. 21.

Referring to FIG. 22, the electronic device 101 may include a connection coil 430 capable of independently applying a clockwise or counterclockwise current to each of the first coil portion 420a and the second coil portion 420b. For example, the connection coil 430 may include a first connection coil 431 connected to the first coil portion 420a and a second connection coil 432 connected to the second coil portion 420b. The first connection coil 431 may be provided as a pair between the first coil portion 420a and the driving circuit 440. The second connection coil 432 may be provided as a pair between the second coil portion 420b and the driving circuit 440. The driving circuit 440 may apply a current to the first coil portion 420a through the pair of first connection coils 431, and may switch the direction of a magnetic field formed in the first coil portion 420a by switching a direction in which the current flows (e.g., clockwise → counterclockwise, or counterclockwise → clockwise). The driving circuit 440 may apply a current to the second coil portion 420b through the pair of second connection coils 432, and may switch the direction of a magnetic field formed in the second coil portion 420b by switching a direction in which the current flows (e.g., clockwise → counterclockwise, or counterclockwise → clockwise).

The electronic device 101 may include a switch element 450 for selectively applying a current to the first coil portion 420a and the second coil portion 420b. The switch element 450 may be disposed between the coil portion 420 and the driving circuit 440. The switch element 450 may be electrically connected to the driving circuit 440 using a third connection coil 460. Here, the third connection coil 460 may be provided as a pair between the driving circuit 440 and the switch element 450. The switch element 450 may receive a control signal through a control signal line 470 connected to the driving circuit 440, and may perform one of a current application operation for the first coil portion 420a and a current application operation for the second coil portion 420b based on the control signal.

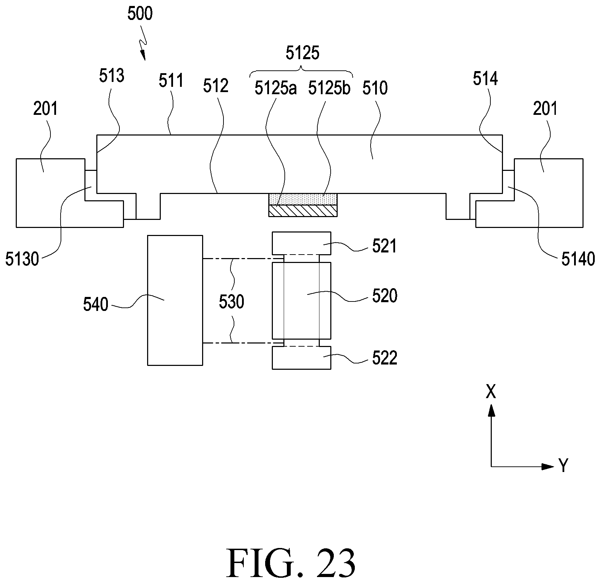

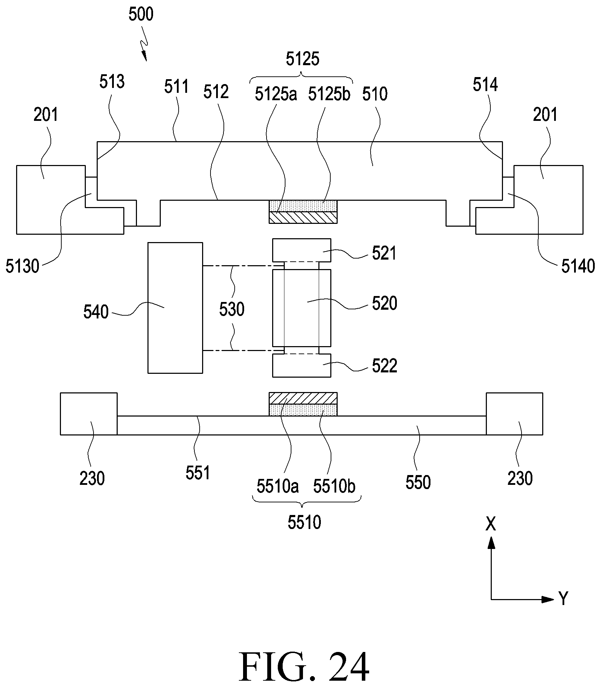

FIG. 23 is a view illustrating a button assembly according to an embodiment of the disclosure. FIG. 24 is a view illustrating a button assembly according to an embodiment of the disclosure.

Referring to FIG. 23, the electronic device 101 may include a button assembly 500 (e.g., the key input device 216, 217 of FIG. 2, the button assembly 220 of FIG. 4, the button assembly 500 of FIG. 10 to FIG. 15, or the button assembly 400 of FIG. 16 to FIG. 22). The button assembly 500 may be disposed in the housing 201. According to an embodiment, the button assembly 500 may be disposed on a side bezel structure 212 of the housing 201. For example, the button assembly 500 may be visually exposed to the outside of the housing 201 through the side bezel structure 212. The side bezel structure 212 may be referred to as a "side portion." Here, the button assembly 500 may be referred to as a "key input device." In addition, the button assembly 500 may be referred to as an "input device." Alternatively, the button assembly 500 may be referred to as a "haptic device" in terms of providing the user with tactile sensation, kinesthetic sensation, and force feedback. Furthermore, the button assembly 500 may be referred to as a "feedback device" in terms of providing the user with a click sensation corresponding to an input.

The button assembly 500 may include a body portion 510. The body portion 510 may be visually exposed to the outside of the housing 201. The body portion 510 may be configured to be touchable. According to an embodiment, the body portion 510 may include a first surface 511 visually exposed to the outside of the housing 201, and a second surface 512 facing in a direction opposite to the first surface 511 (or facing an internal space of the housing 201). A user may input a signal to the button assembly 500 by touching and/or operating a first surface 511 of the body portion 510. To provide haptic feedback to the user when the user touches the body portion 510, the body portion 510 may be configured to be movable in a third direction (e.g., a +X-axis direction) perpendicular to a first direction (e.g., a +Y-axis direction) and a second direction (e.g., a -Y-axis direction), or in a fourth direction (e.g., a -X-axis direction) opposite to the third direction.

The button assembly 500 may include support members 5130 and 5140. The support members 5130 and 5140 may be disposed between the body portion 510 and the housing 201. According to an embodiment, the support members 5130 and 5140 may include a third surface 513 forming one end of the body portion 510 and a fourth surface 514 forming the other end of the body portion 510. According to an embodiment, the support members 5130 and 5140 may include a first support member 5130 supporting a third surface 513 of the body portion 510, and a second support member 5140 supporting a fourth surface 514 of the body portion 510. For example, the support members 5130 and 5140 may include a rubber material. When pressure is applied to the body portion 510, a portion of the support members 5130 and 5140 may be deformed. According to an embodiment, the support members 5130 and 5140 may support at least a portion of the second surface 512 of the body portion 510. Here, the support members 5130 and 5140 may be referred to as "cushioning members" in terms of having a function of mitigating impacts applied to the housing 201 and/or the button assembly 500 when the body portion 510 of the button assembly 500 moves. The support members 5130 and 5140 may be referred to as "elastic members" in terms of having a function of providing an elastic restoring force to restore the body portion 510 of the button assembly 500 to its original state before movement after the movement of the body portion 510.

The button assembly 500 may include a first magnetic member 5125. According to an embodiment, the button assembly 500 may include a first magnetic member 5125 disposed on one surface of the body portion 510. Here, the magnetic member may be referred to as a "magnetic substance." For example, a magnet or a permanent magnet may be included as an example of the magnetic substance. Any magnetic substance that maintains polarities (e.g., maintaining mutually opposite polarities 5125a and 5125b) in a certain state may be included in the magnetic member.

According to an embodiment, the first magnetic member 5125 may be disposed on a second surface 512 of the body portion 510 facing an internal space of the housing 201. In this case, a direction of a magnetic field formed by a polarity of the first magnetic member 5125 may be substantially parallel to a direction in which the second surface 512 of the body portion 510 faces.

The button assembly 500 may include a coil portion 520. According to an embodiment, the coil portion 520 may face the first magnetic member 5125. According to an embodiment, the coil portion 520 may be fixedly disposed on another structure (e.g., brackets 230 and 550) disposed inside the housing 201. The coil portion 520 may include a coil wound a plurality of times. For example, the coil portion 520 may include a solenoid coil, which is a long cylindrical coil formed by uniformly winding a conductive wire.

According to an embodiment, the coil portion 520 may include a first yoke 521 disposed at one end. The first yoke 521 may be configured to face the first magnetic member 5125. The first yoke 521 may serve to concentrate a magnetic field generated when a current is applied to the coil portion 520. According to another embodiment, the coil portion 520 may include a second yoke 522 disposed at the other end. The second yoke 522 may be disposed on the opposite side of the first yoke 521. Similarly to the first yoke 521, the second yoke 522 may also serve to concentrate a magnetic field generated when a current is applied to the coil portion 520. The description of the first yoke 521 and the second yoke 522 may be mutatis mutandis applicable to the descriptions of the first yokes 321 and 421 and the second yokes 322 and 422 described in the other embodiments above.

The button assembly 500 may include a driving circuit 540. According to an embodiment, the button assembly 500 may include a driving circuit 540 electrically connected to the coil portion 520 and configured to control the flow of current flowing through the coil portion 520 to generate an attractive force and/or a repulsive force between the first magnetic member 5125 and the coil portion 520. According to an embodiment, the button assembly 500 may include a connection coil 530 electrically connecting the coil portion 520 and the driving circuit 540. According to an embodiment, the connection coil 530 may be integrally connected to a coil included in the coil portion 520. The connection coil 530 may be provided as a pair between the coil portion 520 and the driving circuit 540. The descriptions of the driving circuit 540 and the connection coil 530 may be mutatis mutandis applicable to the descriptions of the driving circuits 340 and 440 and the connection coils 330 and 430 described in the other embodiments above.

When a current flows through the coil portion 520, a magnetic field may be formed in one direction at the center of the coil portion 520 by Ampere's right-hand screw rule. According to an embodiment, when the first magnetic member 5125 is disposed on one surface (e.g., the second surface 512) of the body portion 510 and one end of the coil portion 520 is disposed to face the first magnetic member 5125, the magnetic field formed by the coil portion 520 and the magnetic field formed by the first magnetic member 5125 may interact with each other. According to the interaction, an attractive force or a repulsive force may be generated between the first magnetic member 5125 and the coil portion 520, which enables the body portion 510 of the button assembly 500 to move, for example, in a direction (e.g., an X-axis direction) perpendicular to the housing of the electronic device. In addition, regarding the operation of providing haptic feedback to the user by using the button assembly 500, the descriptions of the button assemblies 300 and 400 described in the other embodiments above may be mutatis mutandis applicable.

The embodiment of FIG. 24, compared to the embodiment of FIG. 23, may further include a second bracket 550 and a second magnetic member 5510 disposed on the second bracket 550. In describing the embodiment of FIG. 24, descriptions of components overlapping with those included in the embodiment of FIG. 23 may be omitted.

The second bracket 550 is a component disposed in the inner space of the housing 201. According to an embodiment, it may be a component separate from the bracket 230 (hereinafter referred to as a "first bracket 230"), but according to another embodiment, it may be integrally formed with the first bracket 230.

In the embodiment of FIG. 24, the button assembly 500 may include a first magnetic member 5125 and a second magnetic member 5510. According to an embodiment, the button assembly 500 may include the first magnetic member 5125 disposed on one surface (e.g., the second surface 512) of the body portion 510, and the second magnetic member 5510 disposed on one surface 551 of the second bracket 550.

For example, the first magnetic member 5125 may be disposed on the second surface 512 of the body portion 510, and the second magnetic member 5510 may be disposed on a surface 551 of the second bracket 550 facing the second surface 512 of the body portion 510. Here, both the first magnetic member 5125 and the second magnetic member 5510 may be referred to as a "magnetic substance." For example, the magnetic substance may be exemplified by a permanent magnet. The first magnetic member 5125 and the second magnetic member 5510 may be disposed to face each other. Here, the fact that the first magnetic member 5125 and the second magnetic member 5510 face each other may mean that they are arranged such that the same polarities face each other. Referring to FIG. 24, the button assembly 500 according to an embodiment may be disposed such that a second pole 5125b (e.g., an N-pole) of the first magnetic member 5125 abuts a second surface 512 of the body portion 510, with a first pole 5125a (e.g., an S-pole) facing in a direction opposite to the second pole 5125b, and a fourth pole 5510b (e.g., an N-pole) of the second magnetic member 5510 abuts one surface 551 of the second bracket 550, with a third pole 5510a (e.g., an S-pole) facing in a direction opposite to the fourth pole 5510b. Of course, the arrangement of polarities illustrated herein may vary depending on embodiments.

According to an embodiment, one end of the coil portion 520 may face the first magnetic member 5125, and the other end may face the second magnetic member 5510. According to another embodiment, the coil portion 520 may include a first yoke 521 disposed at the one end and a second yoke 522 disposed at the other end. The first yoke 521 may be configured to face the first magnetic member 5125, and the second yoke 522 may be configured to face the second magnetic member 5510.

When a current flows through the coil portion 520, if an attractive force (or repulsive force) is generated between the first magnetic member 5125 and the coil portion 520, a repulsive force (or attractive force) may be generated between the second magnetic member 5510 and the coil portion 520. The driving circuit 540 may apply a current to the coil portion 520 through the pair of connection coils 530, and may switch the direction of the magnetic field formed in the coil portion 520 by switching the direction in which the current flows (e.g., clockwise → counterclockwise, or counterclockwise → clockwise). When the direction of the magnetic field formed in the coil portion 520 is changed, a repulsive force (or attractive force) may be generated between the first magnetic member 5125 and the coil portion 520, and an attractive force (or repulsive force) may be generated between the second magnetic member 5510 and the coil portion 520.

Referring to FIG. 24, the button assembly 500 according to an embodiment may be disposed such that a second pole 5125b (e.g., an N-pole) of a first magnetic member 5125 abuts one surface (e.g., a second surface 512) of a body portion 510, with a first pole 5125a (e.g., an S-pole) facing in a direction opposite to the second pole. Further, the button assembly may be disposed such that a fourth pole 5510b (e.g., an N-pole) of a second magnetic member 5510 abuts a surface 551 of the second bracket 550 facing one surface (e.g., the second surface 512) of the body portion 510, with a third pole 5510a (e.g., an S-pole) facing in a direction opposite to the fourth pole 5510b. In this case, when a current flowing from the connection coil 530 enters and exits the coil portion 520 in a counterclockwise direction, one end of the coil portion 520 may have a polarity (e.g., an N-pole) different from the first pole 5125a (e.g., an S-pole) of the first magnetic member 5125, such that an attractive force may be generated between the first magnetic member 5125 and the coil portion 520. Accordingly, the body portion 510 may move in a fourth direction (e.g., a -X-axis direction). When a current flowing from the connection coil 530 enters and exits the coil portion 520 in a clockwise direction, such that one end of the coil portion 520 has the same polarity (e.g., an S-pole) as the first pole 5125a (e.g., an S-pole) of the first magnetic member 5125, a repulsive force may be generated between the first magnetic member 5125 and the coil portion 520. Accordingly, the body portion 510 may move in a third direction (e.g., a +X-axis direction).

As described above with reference to FIG. 4, the electronic device 101 may further include a sensor (e.g., 222) for additionally sensing an input when touched by a user with respect to the above-described button assembly (e.g., the button assembly 300 of FIG. 10 to FIG. 15, the button assembly 400 of FIG. 16 to FIG. 22, and the button assembly 500 of FIG. 23 and FIG. 24). In addition, when receiving a user's touch input through the sensor, the electronic device 101 may include the button assembly of the disclosure (e.g., the button assembly 300 of FIG. 10 to FIG. 15, the button assembly 400 of FIG. 16 to FIG. 22, and the button assembly 500 of FIG. 23 and FIG. 24) to provide a tactile sensation or other kinesthetic sensation corresponding thereto. The electronic device 101 of the disclosure may convert electrical energy applied to the coil portion (e.g., the coil portion 320 of FIG. 10 to FIG. 15, the coil portion 420 of FIG. 16 to FIG. 22, and the coil portion 520 of FIG. 23 and FIG. 24) into mechanical energy for moving the body portion (e.g., the body portion 310 of FIG. 10 to FIG. 15, the body portion 410 of FIG. 16 to FIG. 22, and the body portion 510 of FIG. 23 and FIG. 24) in one direction or the other direction. Here, the one direction or the other direction of the body portion may correspond to any one of a first direction (e.g., a +Y-axis direction), a second direction (e.g., a -Y-axis direction), a third direction (e.g., a +X-axis direction), and a fourth direction (e.g., a -X-axis direction). The electronic device 101 of the disclosure may include a button assembly (e.g., the button assembly 300 of FIG. 10 to FIG. 15, the button assembly 400 of FIG. 16 to FIG. 22, and the button assembly 500 of FIG. 23 and FIG. 24) provided separately from the haptic module (e.g., the haptic module 179 of FIG. 1, the vibration motor 260 of FIG. 6) and capable of providing separate haptic feedback, thereby enabling a user to experience more localized, more precise, and more diverse user experiences (UX).

The electronic device according to various embodiments of the disclosure may be one of various types of devices. The electronic device may include, e.g., a portable communication device (e.g., a smart phone), a computer device, a portable multimedia device, a portable medical device, a camera, a wearable device, or a home appliance device. The electronic device according to embodiments of the disclosure is not limited to the aforementioned devices.

The various embodiments of the disclosure and the terms used herein are not intended to limit the technical features described in the disclosure to specific embodiments, and should be understood to include various changes, equivalents, or replacements of the corresponding embodiments. In connection with the description of the drawings, similar reference numerals may be used for similar or related components. The singular form of a noun corresponding to an item may include one or more of the items, unless the relevant context clearly indicates otherwise. In the present document, each of the phrases such as "A or B," "at least one of A and B," "at least one of A or B," "A, B or C," "at least one of A, B and C," and "at least one of A, B, or C" may include any one of the items listed together in the corresponding phrase, or all possible combinations thereof. Terms such as "first" or "second" may be used merely to distinguish a corresponding component from another corresponding component, and do not limit the corresponding components in another aspect (e.g., importance or order). When a (e.g., first) component is referred to as being "coupled" or "connected" to another (e.g., second) component, with or without the term "functionally" or "communicatively," it means that the certain component may be connected to the other component directly (e.g., by wire), wirelessly, or through a third component.

The term "module" used in various embodiments of the disclosure may include a unit implemented in hardware, software, or firmware, and may be used interchangeably with terms such as logic, logic block, component, or circuit. A module may be an integrally configured component or a minimum unit or a part thereof of the component performing one or more functions. For example, according to an embodiment, the module may be implemented in the form of an application-specific integrated circuit (ASIC).

The various embodiments of the disclosure may be implemented as software (e.g., the program 140) including one or more instructions stored in a storage medium (e.g., the internal memory 136 or the external memory 138) readable by a machine (e.g., the electronic device 101). For example, a processor (e.g., the processor 120) of the machine (e.g., the electronic device 101) may invoke at least one of the one or more instructions stored from the storage medium and execute it. This makes it possible for the machine to be operated to perform at least one function according to the at least one invoked instruction. The one or more instructions may include code generated by a compiler or code that may be executed by an interpreter. The machine-readable storage medium may be provided in the form of a non-transitory storage medium. Here, "non-transitory" merely means that the storage medium is a tangible device and does not include a signal (e.g., an electromagnetic wave), and this term does not distinguish between a case where data is stored semi-permanently in the storage medium and a case where data is temporarily stored.

According to an embodiment, the method according to various embodiments of the disclosure may be provided by being included in a computer program product. The computer program product may be traded as a commodity between a seller and a buyer. The computer program product may be distributed in the form of a machine-readable storage medium (e.g., a compact disc read only memory (CD-ROM)), or distributed (e.g., downloaded or uploaded) online through an application store (e.g., Play Store^{TM}) or directly between two user devices (e.g., smart phones). In the case of online distribution, at least a part of the computer program product may be at least temporarily stored or temporarily generated in a machine-readable storage medium such as memory of a manufacturer's server, a server of an application store, or a relay server.

According to various embodiments, each component (e.g., a module or a program) of the aforementioned components may include a single entity or a plurality of entities, and some of the plurality of entities may be separately disposed in another component. According to various embodiments, one or more of the aforementioned components or operations may be omitted, or one or more other components or operations may be added. Alternatively or additionally, a plurality of components (e.g., modules or programs) may be integrated into one component. In this case, the integrated component may perform one or more functions of each component of the plurality of components in the same or similar manner as performed by a corresponding component among the plurality of components prior to the integration. According to various embodiments, operations performed by a module, a program, or another component may be executed sequentially, in parallel, repeatedly, or heuristically, or one or more of the operations may be executed in a different order or omitted, or one or more other operations may be added.

According to an embodiment of the disclosure, there may be provided an electronic device 101 including: a housing 201; and a button assembly 300; 400; 500 of which at least a portion is visually exposed to the outside of the housing 201, wherein the button assembly 300; 400; 500 includes: a body portion 310; 410; 510; a first magnetic member 3122; 4122; 5125 disposed on one surface of the body portion 310; 410; 510; a coil portion 320; 420; 520 facing the first magnetic member 3122; 4122; 5125; and a driving circuit 340; 440; 540 electrically connected to the coil portion 320; 420; 520 and configured to control a flow of current flowing through the coil portion 320; 420; 520 to generate an attractive force and/or a repulsive force between the first magnetic member 3122; 4122; 5125 and the coil portion 320; 420; 520.

According to an embodiment, the electronic device may include a first yoke 321; 421; 521 disposed at one end of the coil portion 320; 420; 520.

According to an embodiment, the coil portion 320; 420; 520 may include a first protrusion 3121; 4121 protruding from the body portion 310; 410; 510 toward an inner space of the housing 201.

According to an embodiment, the first magnetic member 3122; 4122; 5125 may be a first magnetic substance 3122; 5125 or a first magnetic material 4122.

According to an embodiment, the electronic device may include a second magnetic member 3124; 4124; 5510 disposed at a position facing the first magnetic member 3122; 4122; 5125.

According to an embodiment, the electronic device may include a second protrusion 3123; 4123 protruding from the body portion 310; 410; 510 toward the inner space of the housing 201 and spaced apart from the first protrusion 3121; 4121 by a specified distance in a direction parallel to a longitudinal direction of the button assembly.

According to an embodiment, the electronic device may include a second yoke 322; 422; 522 disposed at the other end of the coil portion 320; 420; 520.

According to an embodiment, the body portion 310; 410; 510 may be configured to move in a first direction parallel to a longitudinal direction of the body portion or a second direction opposite to the first direction according to an attractive force or a repulsive force between the first magnetic member 3122; 4122; 5125 and the coil portion 320; 420; 520.

According to an embodiment, the coil portion 420 may include a first coil portion 420a and a second coil portion 420b spaced apart from the first coil portion 420a in a first direction parallel to a longitudinal direction of the body portion.

According to an embodiment, the body portion 310; 410; 510 may be configured to move in a third direction perpendicular to a longitudinal direction of the body portion or a fourth direction opposite to the third direction according to an attractive force and/or a repulsive force between the first magnetic member 3122; 4122; 5125 and the coil portion 320; 420; 520.

According to an embodiment, the electronic device may include a support member 3130; 3140; 4130; 4140; 5130; 5140 supporting the body portion 310; 410; 510 between the body portion 310; 410; 510 and the housing.

According to an embodiment, the electronic device may include a connection coil 330; 430; 530 electrically connecting the coil portion 320; 420; 520 and the driving circuit 340; 440; 540.

According to an embodiment, the connection coil 430 may include a first connection coil 431 connected to the first coil portion 420a of the coil portion 420 and a second connection coil 432 connected to the second coil portion 420b of the coil portion 420.

According to an embodiment, the driving circuit 440 may selectively control an operation of connecting the first coil portion 420a of the coil portion 420 to the first connection coil 431 or connecting the second coil portion 420b of the coil portion 420 to the second connection coil 432.

According to an embodiment, the electronic device may further include a sensor 222 for sensing an input when a user touches the button assembly. The driving circuit 340; 440; 540 may move the body portion in one direction or another direction to provide a haptic feedback corresponding thereto when receiving the user's touch input through the sensor.

According to an embodiment of the disclosure, there may be provided an electronic device including a housing 201 and a button assembly 300, at least a portion of which is visually exposed to the outside of the housing 201. The button assembly 300 may include a sensor 222 for sensing an input when a user touches the button assembly 300; a body portion 310 movably disposed in the housing 201; a first protrusion 3121 protruding from the body portion 310 toward an internal space of the housing; a first magnetic member 3122 disposed on one surface of the first protrusion 3121; a coil portion 320 disposed to face the first magnetic member 3122; a first yoke 321 disposed at one end of the coil portion 320; and a driving circuit 340 electrically connected to the coil portion 320 and configured to control a flow of current flowing through the coil portion 320 to generate an attractive force or a repulsive force between the first magnetic member 3122 and the coil portion 320. The driving circuit 340 may be configured to move the body portion 310 in one direction or another direction to provide a haptic feedback corresponding thereto when receiving a user's touch input through the sensor.

According to an embodiment, the electronic device may include a second protrusion 3123 protruding from the body portion 310 toward an internal space of the housing 201 and disposed to be spaced apart from the first protrusion 3121 by a predetermined distance in a direction parallel to a longitudinal direction of the button assembly. The electronic device may include a second magnetic member 3124; 4124; 5510 disposed on one surface of the second protrusion 3123 at a position facing the first magnetic member 3122.

According to an embodiment, the body portion 310 may be configured to move in a first direction parallel to a longitudinal direction of the body portion or a second direction opposite to the first direction according to an attractive force or a repulsive force between the first magnetic member 3122 and the coil portion 320.

According to an embodiment of the disclosure, there may be provided an electronic device including a housing 201; and a button assembly 400, at least a portion of which is visually exposed to the outside of the housing 201. The button assembly 400 may include a sensor 222 for sensing an input when a user touches the button assembly 400; a body portion 410 movably disposed in the housing 201; a first protrusion 4121 protruding from the body portion 410 toward an internal space of the housing; a first magnetic member 4122 disposed on one surface of the first protrusion 4121 or inside the housing; a coil portion 420 disposed to face the first magnetic member 4122; a first yoke 421 disposed at one end of the coil portion 420; and a driving circuit 440 electrically connected to the coil portion 420 and configured to control a flow of current flowing through the coil portion 420 to generate an attractive force between the first magnetic member 4122 and the coil portion 420. The driving circuit 440 may be configured to move the body portion 410 in one direction or another direction to provide a haptic feedback corresponding thereto when receiving a user's touch input through the sensor.

Although specific embodiments have been described in detail above, it will be apparent to those of ordinary skill in the art that various modifications can be made without departing from the scope of the disclosure.

The disclosure has been illustrated and described with reference to an embodiment, but it should be understood that the embodiment is provided by way of example and not intended to limit the scope of the disclosure. It will be apparent to those skilled in the art that various changes in form and detail may be made without departing from the overall scope of the present disclosure, including the appended claims and equivalents thereof.

## Claims

1. An electronic device (101), comprising:
a housing (201); and
a button assembly (300; 400; 500), at least a portion of which is visually exposed to the outside of the housing (201),
wherein the button assembly (300; 400; 500) includes:
a body portion (310; 410; 510);
a first magnetic member (3122; 4122; 5125) disposed on a surface of the body portion (310; 410; 510);
a coil portion (320; 420; 520) facing the first magnetic member (3122; 4122; 5125); and
a driving circuit (340; 440; 540) electrically connected to the coil portion (320; 420; 520) and configured to control a flow of current flowing through the coil portion (320; 420; 520) to generate an attractive force and/or a repulsive force between the first magnetic member (3122; 4122; 5125) and the coil portion (320; 420; 520).

2. The electronic device of claim 1, comprising:
a first yoke (321; 421; 521) disposed at one end of the coil portion (320; 420; 520).

3. The electronic device of claim 1 or 2,
wherein the coil portion (320; 420; 520) includes a first protrusion (3121; 4121) protruding from the body portion (310; 410; 510) toward an inner space of the housing (201).

4. The electronic device of any one of claims 1 to 3,
wherein the first magnetic member (3122; 4122; 5125) is a first magnetic substance (3122; 5125) or a first magnetic material (4122).

5. The electronic device of any one of claims 1 to 4, comprising:
a second magnetic member (3124; 4124; 5510) disposed at a position facing the first magnetic member (3122; 4122; 5125).

6. The electronic device of claim 5, comprising:
a second protrusion (3123; 4123) protruding from the body portion (310; 410; 510) toward the inner space of the housing (201), and disposed to be spaced apart from the first protrusion (3121; 4121) at a specified distance in a direction parallel to a longitudinal direction of the button assembly.

7. The electronic device of claim 5, comprising:
a second yoke (322; 422; 522) disposed at the other end of the coil portion (320; 420; 520).

8. The electronic device of any one of claims 1 to 7,
wherein the body portion (310; 410; 510) is configured to move in a first direction parallel to the longitudinal direction of the body portion or in a second direction opposite to the first direction according to an attractive force or a repulsive force between the first magnetic member (3122; 4122; 5125) and the coil portion (320; 420; 520).

9. The electronic device of any one of claims 1 to 8,
wherein the coil portion (420) includes a first coil portion (420a) and a second coil portion (420b) spaced apart from the first coil portion (420a) in a first direction parallel to the longitudinal direction of the body portion.

10. The electronic device of any one of claims 1 to 7,
wherein the body portion (310; 410; 510) is configured to move in a third direction perpendicular to the longitudinal direction of the body portion or in a fourth direction opposite to the third direction according to an attractive force and/or a repulsive force between the first magnetic member (3122; 4122; 5125) and the coil portion (320; 420; 520).

11. The electronic device of any one of claims 1 to 10, comprising a support member (3130; 3140; 4130; 4140; 5130; 5140) supporting the body portion between the body portion (310; 410; 510) and the housing.

12. The electronic device of any one of claims 1 to 10, comprising a connection coil (330; 430; 530) electrically connecting the coil portion (320; 420; 520) and the driving circuit (340; 440; 540).

13. The electronic device of claim 12, wherein the connection coil (430) includes a first connection coil (431) connected to the first coil portion (420a) of the coil portion (420), and a second connection coil (432) connected to the second coil portion (420b) of the coil portion (420).

14. The electronic device of claim 13, wherein the driving circuit (440) is configured to selectively control an operation of connecting the first coil portion (420a) of the coil portion (420) to the first connection coil (431), or connecting the second coil portion (420b) of the coil portion (420) to the second connection coil (432).

15. The electronic device of any one of claims 1 to 14, further comprising a sensor (222) for sensing a user's touch input on the button assembly,
wherein the driving circuit (340; 440; 540) is configured to move the body portion in one direction or another direction to provide a corresponding haptic feedback when the user's touch input is received through the sensor.
